# DEMANDE DE BREVET EUROPEEN

(11) **EP 3 840 443 A1**
(43) Date de publication de la demande: **23.06.2021**
(21) Numéro de dépôt: 20212153.9
(22) Date de dépôt: 07.12.2020
(51) Int. Cl.: H04W 12/069, H04W 12/40, H04L 29/06, H04W 12/71, H04W 12/72, H04W 12/122

(54) **PROCÉDÉ DE GESTION D'AUTHENTIFICATION D'UN ÉQUIPEMENT DANS UN SYSTÈME DE COMMUNICATION DE DONNÉES, ET SYSTÈME POUR LA MISE EN OEUVRE DU PROCÉDÉ**

(30) Priorité: 17.12.2019 FR 1914631
(71) Demandeur: Electricité de France, 75008 Paris (FR)
(72) Inventeur: LUCIDARME, Thierry, 78460 CHEVREUSE (FR)
(74) Mandataire: Plasseraud IP

(57) **Abrégé**

Un procédé de gestion d'authentification d'un équipement dans un système de communication de données pour l'échange de données entre l'équipement et un serveur applicatif du système, le système comprenant un premier réseau de communication de données utilisant une première fonction de sécurité pour sécuriser les communications de données au sein du premier réseau, couplé de manière opérationnelle à un deuxième réseau de communication de données utilisant une deuxième fonction de sécurité pour sécuriser les communications de données au sein du deuxième réseau, est proposé, qui comprend, dans une unité de gestion d'authentification du système mis en œuvre dans un nœud du deuxième réseau de communication : recevoir une requête d'authentification de l'équipement selon la deuxième fonction de sécurité pour l'accès au serveur applicatif; déterminer si un identifiant de l'équipement dans le premier réseau de communication a été reçu suite à la réception d'une requête d'authentification de l'équipement selon la deuxième fonction; et lorsque l'identifiant de l'équipement n'a pas été reçu, générer une réponse d'échec d'authentification de l'équipement.

## Description

### Domaine technique

La présente invention se rapporte à un procédé de gestion d'authentification d'un équipement dans un système de communication de données, ainsi qu'à un équipement et un système informatique pour la mise en œuvre de ce procédé. Elle s'applique notamment aux systèmes de communication de données comprenant un ou plusieurs réseaux électriques intelligents et des équipements terminaux intelligents connectés.

### Technique antérieure

Le développement par l'organisation 3GPP (de l'anglais « Third Generation Partnership Project) de spécifications techniques pour systèmes sans fil de cinquième génération (5G) conduisent à envisager le déploiement prochain de réseaux 5G dans le cadre d'applications de type verticale, comme par exemple la gestion de compteurs intelligents de consommation d'énergie électrique. Des équipements terminaux intelligents, dits IED (de l'anglais «Intelligent Electronic Device »), seront connectés à des réseaux de communication de données afin d'échanger des données avec un ou plusieurs serveurs applicatifs de gestion de services fournis par un opérateur de service dédié disposant de sa propre infrastructure de réseau ou par des entreprises de fourniture de service (en anglais « utility companies ») opérant un réseau. L'utilisation de réseaux sans fil 5G est ainsi anticipée dans le cadre de réseaux électriques intelligents (en anglais « smart grid ») utilisant des équipements IED connectés à un réseau 5G.

L'utilisation de réseau sans fil 5G dans le cadre de réseaux de type « smart grid » utilisant des équipements IED connectés soulève la question de la sécurisation des échanges de données entre un équipement IED et un serveur du réseau électrique intelligent. Cette question n'a pas encore été explorée

### Résumé

La présente divulgation vient améliorer la situation.

Selon un premier aspect, il est proposé un procédé de gestion d'authentification d'un équipement dans un système de communication de données pour l'échange de données entre l'équipement et un serveur applicatif du système, le système comprenant un premier réseau de communication de données utilisant une première fonction de sécurité pour sécuriser les communications de données au sein du premier réseau, couplé de manière opérationnelle à un deuxième réseau de communication de données utilisant une deuxième fonction de sécurité pour sécuriser les communications de données au sein du deuxième réseau, le procédé comprenant, dans une unité de gestion d'authentification du système mis en œuvre dans un nœud du deuxième réseau de communication : recevoir une requête d'authentification de l'équipement selon la deuxième fonction de sécurité pour l'accès au serveur applicatif ; déterminer si un identifiant de l'équipement dans le premier réseau de communication a été reçu suite à la réception d'une requête d'authentification de l'équipement selon la première fonction ; lorsque l'identifiant de l'équipement n'a pas été reçu, générer une réponse d'échec d'authentification de l'équipement.

Les caractéristiques exposées dans les paragraphes suivants peuvent, optionnellement, être mises en œuvre. Elles peuvent être mises en œuvre indépendamment les unes des autres ou en combinaison les unes avec les autres :

Dans un ou plusieurs modes de réalisation, le procédé proposé peut comprendre en outre : recevoir une requête d'authentification de l'équipement selon la première fonction de sécurité au premier réseau de communication, la requête d'authentification utilisant l'identifiant de l'équipement.

Dans un ou plusieurs modes de réalisation, dans lesquels le système comprend en outre une base de données préconfigurée avec une correspondance entre l'identifiant et un élément de sécurité de la deuxième fonction de sécurité pour des requêtes d'authentification de l'équipement selon la deuxième fonction adressées au deuxième réseau, le procédé proposé peut comprendre en outre : envoyer à la base de données une requête de vérification d'enregistrement dans la base de données de l'identifiant reçu, la requête comprenant l'identifiant reçu.

Dans un ou plusieurs modes de réalisation, le procédé proposé peut comprendre en outre : sur réception d'une réponse d'absence dans la base de données d'enregistrement de l'identifiant reçu, ou d'une réponse indiquant une anomalie relative à une ou plusieurs requêtes d'authentification précédentes de l'équipement selon la première fonction de sécurité au premier réseau de communication et/ou selon la deuxième fonction de sécurité au deuxième réseau de communication, générer la réponse d'échec d'authentification de l'équipement.

Dans un ou plusieurs modes de réalisation, dans lesquels le système comprend en outre une base de données préconfigurée avec une correspondance entre l'identifiant et un élément de sécurité de la deuxième fonction de sécurité pour des requêtes d'authentification de l'équipement selon la deuxième fonction adressées au deuxième réseau, le procédé proposé peut comprendre en outre : recevoir une requête d'authentification de l'équipement selon la deuxième fonction de sécurité au deuxième réseau de communication, la requête d'authentification utilisant l'élément de sécurité ; envoyer à la base de données une requête de vérification d'enregistrement dans la base de données de l'identifiant reçu en correspondance avec l'élément de sécurité reçu, la requête comprenant l'identifiant reçu et l'élément de sécurité reçu.

Dans un ou plusieurs modes de réalisation, le procédé proposé peut comprendre en outre : sur réception d'une réponse de la base de données indiquant une absence de correspondance entre l'identifiant et l'élément reçus, générer la réponse d'échec d'authentification de l'équipement.

Dans un ou plusieurs modes de réalisation, le procédé proposé peut comprendre en outre : initialiser un temporisateur à une durée prédéfinie sur réception de la requête d'authentification de l'équipement selon la première fonction de sécurité au premier réseau de communication ; et lorsqu'aucune requête d'authentification de l'équipement selon la deuxième fonction de sécurité au deuxième réseau de communication n'est reçue avant l'expiration du temporisateur, générer la réponse d'échec d'authentification de l'équipement.

Dans un ou plusieurs modes de réalisation dans lesquels le système comprend en outre une base de données préconfigurée avec une correspondance entre l'identifiant et un élément de sécurité de la deuxième fonction de sécurité pour des requêtes d'authentification de l'équipement selon la deuxième fonction adressées au deuxième réseau, le procédé proposé peut comprendre en outre : envoyer à la base de données une requête d'enregistrement de l'échec d'authentification de l'équipement en correspondance avec l'identifiant et/ou l'élément de sécurité.

Dans un ou plusieurs modes de réalisation dans lesquels l'équipement est muni d'un élément de sécurité initial de la deuxième fonction de sécurité pour des requêtes d'authentification de l'équipement selon la deuxième fonction adressées au deuxième réseau, le procédé proposé peut comprendre en outre : recevoir une requête d'authentification de l'équipement selon la deuxième fonction de sécurité au deuxième réseau de communication, la requête d'authentification utilisant l'élément de sécurité initial ; générer une réponse de succès d'authentification de l'équipement pour autoriser l'accès de l'équipement au serveur applicatif ; sur réception d'un message du serveur applicatif indiquant que l'équipement est enregistré auprès du serveur applicatif en utilisant une connexion sécurisée entre l'équipement et le serveur applicatif suite au succès d'authentification de l'équipement, obtenir un élément de sécurité opérateur ; et transmettre l'élément de sécurité opérateur au serveur applicatif pour transmission à l'équipement en utilisant la connexion sécurisée.

Dans un ou plusieurs modes de réalisation dans lesquels le système comprend en outre une base de données préconfigurée avec une correspondance entre l'identifiant et l'élément de sécurité initial de la deuxième fonction de sécurité pour des requêtes d'authentification de l'équipement selon la deuxième fonction adressées au deuxième réseau, le procédé proposé peut comprendre en outre : envoyer à la base de données une requête de mise à jour de l'élément de sécurité initial avec l'élément de sécurité opérateur.

Dans un ou plusieurs modes de réalisation dans lesquels le système comprend en outre une base de données préconfigurée avec une correspondance entre l'identifiant et un élément de sécurité de la deuxième fonction de sécurité pour des requêtes d'authentification de l'équipement selon la deuxième fonction adressées au deuxième réseau, le procédé proposé peut comprendre en outre : envoyer à la base de données une requête d'enregistrement de l'échec d'authentification de l'équipement en correspondance avec l'identifiant et/ou l'élément de sécurité.

Un autre aspect concerne un programme d'ordinateur, chargeable dans une mémoire associée à un processeur, et comprenant des portions de code pour la mise en œuvre d'un procédé tel que proposé dans la présente demande lors de l'exécution dudit programme par le processeur.

Un autre aspect concerne un ensemble de données représentant, par exemple par voie de compression ou d'encodage, un programme d'ordinateur tel que proposé dans la présente demande.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant un processeur couplé de manière opérationnelle à une mémoire et à une interface entrées/sorties de communication de données, conduire l'ordinateur à gérer un dispositif selon un procédé selon l'un des modes de réalisation proposés dans la présente demande.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à mettre en œuvre un procédé selon l'un des modes de réalisation proposés dans la présente demande.

### Brève description des dessins

D'autres particularités et avantages de la présente divulgation apparaîtront dans la description ci-après d'exemples de réalisation non limitatifs, en référence aux dessins annexés, dans lesquels :
**Fig. 1**

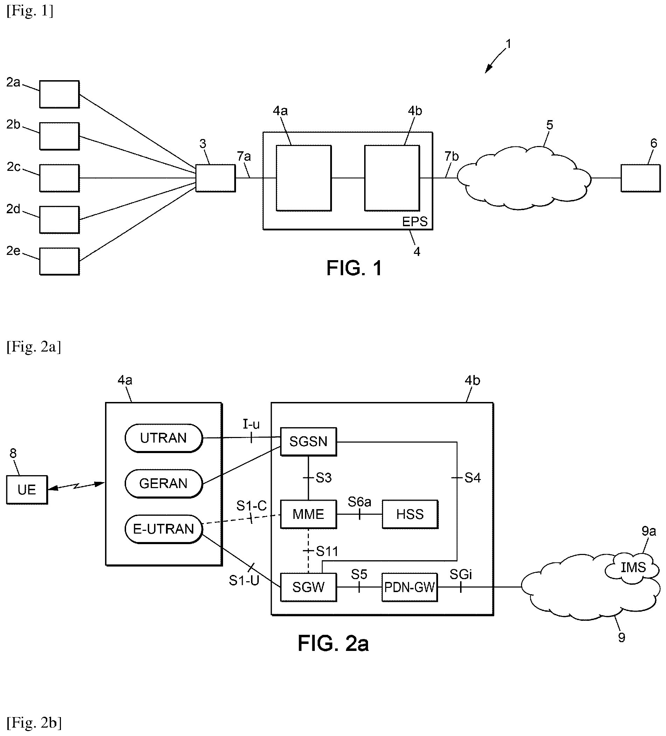

   [Fig. 1] est un schéma illustrant un exemple de système selon un ou plusieurs modes de réalisation ;
**Fig. 2a**
   [Fig. 2a] est un schéma illustrant un exemple d'architecture de réseau pour la mise en œuvre du procédé proposé selon un ou plusieurs modes de réalisation;
**Fig. 2b**

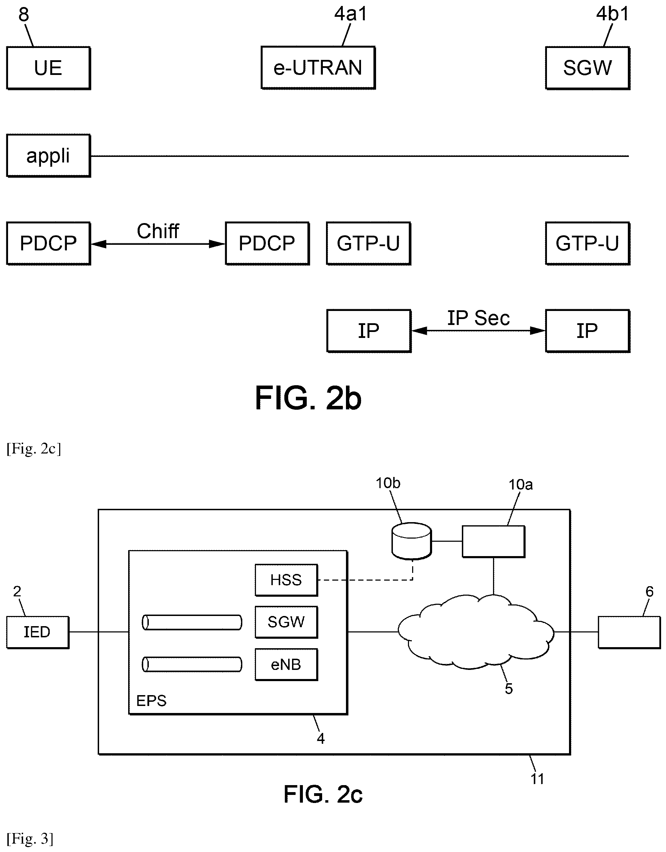

   [Fig. 2b] est un schéma illustrant un exemple de fonction de sécurité dans un réseau EPS pour la protection du plan utilisateur;
**Fig. 2c**
   [Fig. 2c] est un schéma illustrant un exemple illustre un exemple d'architecture de système pour la mise en œuvre du procédé proposé selon un ou plusieurs modes de réalisation;
**Fig. 3**

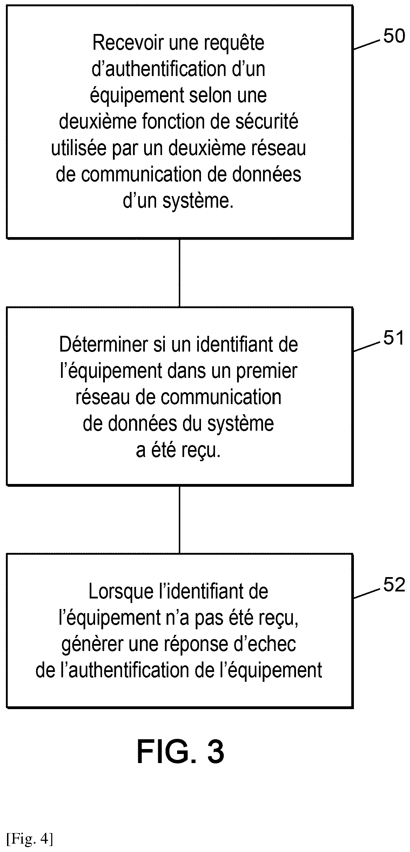

   [Fig. 3] est un diagramme illustrant un procédé selon un ou plusieurs modes de réalisation ;
**Fig. 4**

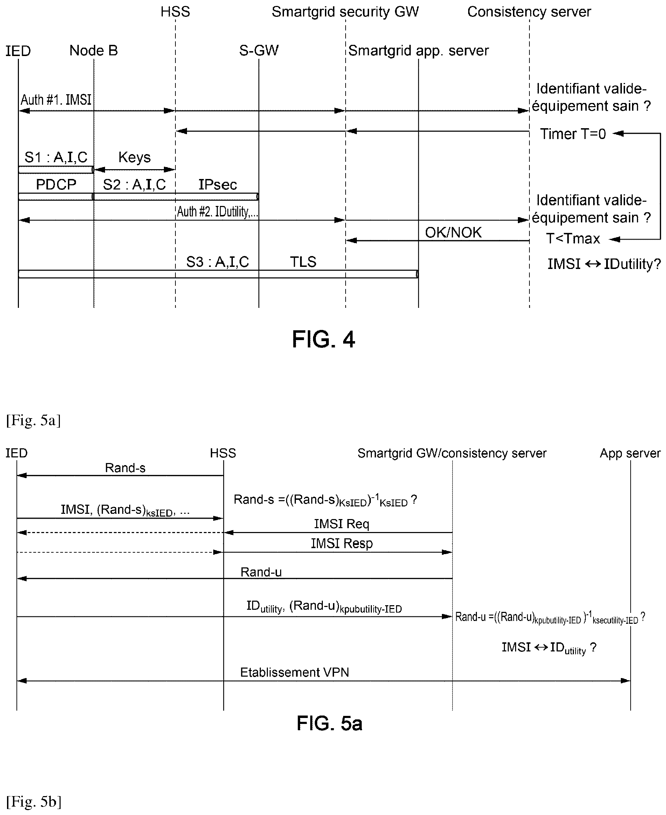

   [Fig. 4] est un diagramme illustrant un exemple d'authentification double selon un ou plusieurs modes de réalisation ;
**Fig. 5a**
   [Fig. 5a] est un diagramme illustrant un exemple de séquence de double authentification d'un équipement selon un ou plusieurs modes de réalisation ;
**Fig. 5b**

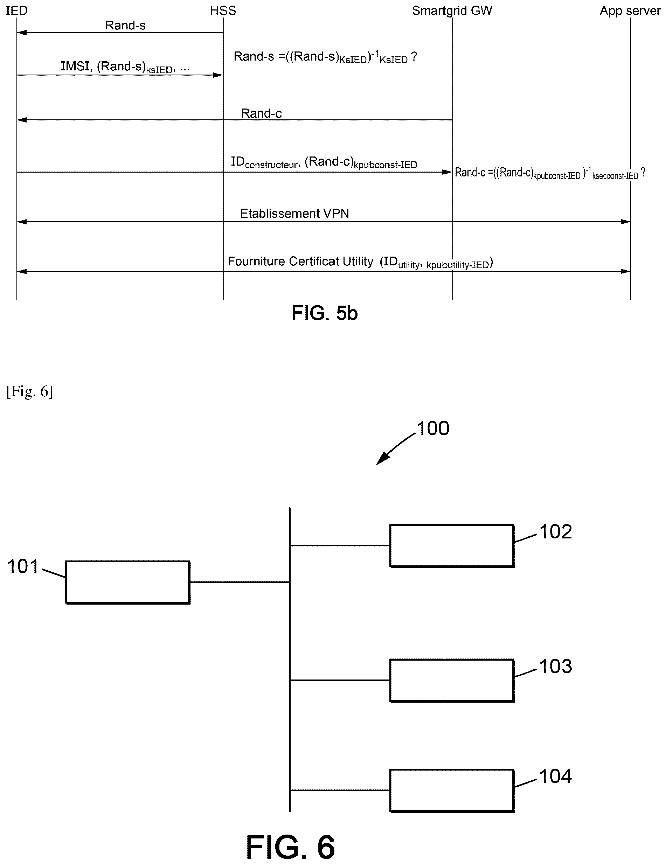

   [Fig. 5b] est un diagramme illustrant un exemple de fourniture d'un certificat « opérateur » en remplacement du certificat initial dont est doté l'équipement IED, selon un ou plusieurs modes de réalisation;
**Fig. 6**
   [Fig. 6] est un diagramme illustrant un exemple d'architecture d'équipement pour la mise en œuvre du procédé proposé selon un ou plusieurs modes de réalisation.

### Description des modes de réalisation

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la présente description.

La présente demande fait référence à des fonctions, moteurs, unités, modules, plateformes, et illustrations de diagrammes des méthodes et dispositifs selon un ou plusieurs modes de réalisation. Chacun des fonctions, moteurs, modules, plateformes, unités et diagrammes décrits peut être mis en œuvre sous forme matérielle, logicielle (y compris sous forme de logiciel embarqué («firmware»), ou de «middleware»), microcode, ou toute combinaison de ces derniers. Dans le cas d'une mise en œuvre sous forme logicielle, les fonctions, moteurs, unités, modules et/ou illustrations de diagrammes peuvent être mis en œuvre par des instructions de programme d'ordinateur ou du code logiciel, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code logiciel exécuté(es) sur l'ordinateur ou l'appareil ou dispositif programmable de traitement de données, constituent des moyens de mise en œuvre de ces fonctions.

Les modes de réalisation d'un support lisible par ordinateur incluent, de manière non exhaustive, des supports de stockage informatique et des supports de communication, y compris tout support facilitant le transfert d'un programme d'ordinateur d'un endroit vers un autre. Par «support(s) de stockage informatique», on entend tout support physique pouvant être accédé par ordinateur. Les exemples de support de stockage informatique incluent, de manière non limitative, les disques ou composants de mémoire flash ou tous autres dispositifs à mémoire flash (par exemple des clés USB, des clés de mémoire, des sticks mémoire, des disques-clés), des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires («smart cards»), des mémoires de type SSD («Solid State Drive»), et toute autre forme de support utilisable pour transporter ou stocker ou mémoriser des données ou structures de données qui peuvent être lues par un processeur d'ordinateur.

En outre, diverses formes de support lisible par ordinateur peuvent transmettre ou porter des instructions vers un ordinateur, telles qu'un routeur, une passerelle, un serveur, ou tout équipement de transmission de données, qu'il s'agisse de transmission filaire (par câble coaxial, fibre optique, fils téléphoniques, câble DSL, ou câble Ethernet), sans-fil (par infrarouge, radio, cellulaire, microondes), ou des équipements de transmission virtualisés (routeur virtuel, passerelle virtuelle, extrémité de tunnel virtuel, pare-feu virtuel). Les instructions peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

De plus, les termes «notamment», «par exemple», «exemple», «typiquement» sont utilisés dans la présente description pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Par «serveur» ou «plateforme», on entend dans la présente demande tout point de service (virtualisé ou non) ou dispositif opérant des traitements de données, une ou plusieurs bases de données, et/ou des fonctions de communication de données. Par exemple, et de manière non limitative, le terme «serveur» ou le terme «plateforme» peut faire référence à un processeur physique couplé de manière opérationnelle avec des fonctions de communication, de base de données et de stockage de données associées, ou faire référence à un réseau, un groupe, un ensemble ou un complexe de processeurs et des équipements de stockage de données et de mise en réseau associés, ainsi qu'un système d'exploitation et un ou plusieurs système(s) de base de données et des logiciels applicatifs en support des services et fonctions fournies par le serveur. Un dispositif informatique peut être configuré pour envoyer et recevoir des signaux, par réseau(x) de transmission sans-fil et/ou filaire, ou peut être configuré pour des traitements et/ou du stockage de données ou de signaux, et peut donc fonctionner en tant que serveur. Ainsi, des équipements configurés pour opérer en tant que serveur peuvent inclure, à titre d'exemples non limitatifs, des serveurs dédiés montés sur rack, des ordinateurs de bureau, des ordinateurs portables, des passerelles de service (parfois appelées «box» ou «passerelle résidentielle»), des décodeurs multimédia (parfois appelés «set-top boxes»), des équipements intégrés combinant diverses fonctionnalités, telles que deux ou plus des fonctionnalités mentionnées ci-dessus. Les serveurs peuvent fortement varier dans leur configuration ou leurs capacités, mais un serveur inclura généralement une ou plusieurs unité(s) centrale(s) de traitement et une mémoire. Un serveur peut aussi inclure un ou plusieurs équipement(s) de mémoire de masse, une ou plusieurs alimentation(s) électrique(s), une ou plusieurs interface(s) réseau sans-fil et/ou filaire(s), une ou plusieurs interface(s) d'entrée/sortie, un ou plusieurs système(s) d'exploitation, tel(s) que Windows Server, Mac OS X, Unix, Linux, FreeBSD, or un équivalent.

Les termes «réseau» et «réseau de communication» tels qu'utilisés dans la présente demande font référence à une ou plusieurs liaisons de données qui peuvent coupler ou connecter des équipements, éventuellement virtualisés, de manière à permettre le transport de données électroniques entre des systèmes informatiques et/ou des modules et/ou d'autres dispositifs ou équipements électroniques, tel qu'entre un serveur et un dispositif client ou d'autres types de dispositifs, y compris entre dispositifs sans fil couplés ou connectés par un réseau sans fil, par exemple. Un réseau peut aussi inclure une mémoire de masse pour stocker des données, tel qu'un NAS (en anglais «network attached storage», un SAN (en anglais «storage area network»), ou toute autre forme de support lisible par un ordinateur ou par une machine, par exemple. Un réseau peut comprendre, en tout ou partie, le réseau Internet, un ou plusieurs réseaux locaux (en anglais «local area networks», ou LANs), un ou plusieurs réseaux de type WAN (en anglais «wide area networks»), des connexions de type filaire, des connexions de type sans fil, de type cellulaire, ou toute combinaison de ces différents réseaux. De manière similaire, des sous-réseaux peuvent utiliser différentes architectures ou être conformes ou compatibles avec différents protocoles, et inter-opérer avec des réseaux de plus grande taille. Différents types d'équipements peuvent être utilisés pour rendre interopérables différentes architectures ou différents protocoles. Par exemple, un routeur peut être utilisé pour fournir une liaison de communication ou une liaison de données entre deux LANs qui seraient autrement séparés et indépendants.

Les termes «couplé de manière opérationnelle», «couplé», «monté», «connecté» et leurs variantes et formes diverses utilisés dans les présentes font référence à des couplages, connexions, montages, qui peuvent être directs ou indirects, et comprennent notamment des connexions entre équipements électroniques ou entre des portions de tels équipements qui permettent des opérations et fonctionnements tels que décrits dans la présente demande. De plus, les termes «connectés» et «couplés» ne sont pas limités à des connections ou des couplages physiques ou mécaniques. Par exemple, un couplage de manière opérationnelle peut inclure une ou plusieurs connexion(s) filaire(s) et/ou une ou plusieurs connexion(s) sans-fil entre deux équipements ou plus qui permettent des liaisons de communication simplex et/ou duplex entre les équipements ou des portions des équipements. Selon un autre exemple, un couplage opérationnel ou une connexion peut inclure un couplage par liaison filaire et/ou sans-fil pour permettre des communications de données entre un serveur du système proposé et un autre équipement du système.

Les termes « équipement géré » font référence à un équipement d'un système de communication de données auquel le procédé proposé est appliqué pour la gestion de l'authentification de l'équipement.

Les procédés et systèmes proposés visent à sécuriser les échanges de données entre un équipement de type IED et un serveur (par exemple un centre de contrôle de réseau) connectés par des premier et deuxième réseau de communication de données utilisant différentes fonctions de sécurité pour l'authentification des requêtes d'accès au réseau (typiquement un réseau de communication sans fil connecté à un réseau de communications de données de type PDN). En fonction du mode de réalisation choisi, différents types ou architectures d'équipements IED pourront être envisagés pour la mise en œuvre du procédé de gestion d'authentification proposé. Ainsi, dans un ou plusieurs modes de réalisation, l'équipement IED configuré pour la mise en œuvre des procédés et systèmes proposés pourra être un équipement installé chez l'utilisateur final, comme par exemple un compteur électrique intelligent. Dans d'autres modes de réalisation, l'équipement IED configuré pour la mise en œuvre des procédés et systèmes proposés pourra être un équipement de type concentrateur, auquel sont connectés des équipements installés chez des utilisateurs finaux respectifs, comme par exemple un concentrateur auquel sont connectés des compteurs électriques intelligents. Dans un ou plusieurs modes de réalisation, différents types ou architectures d'équipements IED pourront être utilisés au sein d'un même système tel que proposé pour la mise en œuvre du procédé de gestion d'authentification proposé.

La figure 1 illustre un exemple de système (1) comprenant un ensemble d'équipements terminaux (2a, 2b, 2c, 2d, 2e) connectés, par le biais d'un équipement concentrateur (3), à un réseau (4) de télécommunications de type EPS (de l'anglais « Evolved Packet System »), par exemple de type 4G ou 5G, connecté à un réseau (5) de communication de données, comme par exemple un réseau IP (de l'anglais « Internet Protocol »), auquel un serveur (6) est connecté pour la communication de données avec les équipements terminaux (2a, 2b, 2c, 2d, 2e) et/ou avec le concentrateur (3).

Le réseau EPS (4) comprendra typiquement un réseau d'accès (4a) et un réseau cœur (4b) interconnectés, l'équipement concentrateur (3) étant connecté au réseau d'accès (4a) par un lien de communication de données (7a) comprenant un lien radio et le réseau (5) de communication de données étant connecté au réseau cœur (4b) par un lien de communication de données (7b).

L'homme du métier comprendra que les procédés et systèmes proposés ne sont pas limités à un ou plusieurs types particuliers de lien(s) de communication, que ce soit pour la communication de données entre un nœud concentrateur (3) et un réseau EPS (4), pour la communication de données entre un réseau EPS (4) et un réseau de communication de données (5), ou pour la communication de données entre le réseau de communication de données (5) et un serveur (6). De même, les procédés et systèmes proposés ne sont pas limités à un ou plusieurs types particuliers et/ou architecture(s) de réseau, qu'il s'agisse du réseau EPS (4) ou du réseau de communication de données (5). Ainsi, en fonction du mode de réalisation choisi, les procédés et systèmes proposés pourront être mis en œuvre avec un réseau EPS ou une combinaison de plusieurs types de réseaux EPS, comme par exemple un réseau EPS 4G, un réseau EPS 5G, ou une combinaison de réseaux utilisant un réseau EPS 4G et/ou un réseau EPS 5G. De même, en fonction du mode de réalisation choisi, les procédés et systèmes proposés pourront être mis en œuvre avec un réseau de communication de données par paquets (en anglais, « Racket Data Network », ou « PDN »), comme par exemple, un ou plusieurs réseaux IP interconnectés, ou une combinaison de plusieurs types de réseaux de communication de données comprenant un réseau de communication de données par paquets.

En fonction du mode de réalisation, le lien de communication entre un équipement terminal (2a, 2b, 2c, 2d, 2e) et le concentrateur (3) pourra comprendre un ou plusieurs types de liens de communications, comme par exemple un lien de communication radio, un lien de communication filaire et/ou un lien de communication optique (par exemple une ou plusieurs fibres optiques). Chaque lien de communication pourra être opéré selon un ou plusieurs protocoles de communication de données correspondant au type de lien. Par exemple, dans un ou plusieurs modes de réalisation, le lien de communication entre un équipement terminal (2a, 2b, 2c, 2d, 2e) et le concentrateur (3) pourra comprendre un lien de communication radio pour la communication de données dans un réseau de type WiFi (de l'anglais « Wireless Fidelity »), fonctionnant selon un ou plusieurs standard IEEE 802.11, et/ou un lien de communication de données par courant porteur en ligne, par exemple de type CPL G3 (courant porteur en ligne de 3^{ème} génération). Ainsi, les procédés et systèmes proposés ne sont pas limités à un type ou une architecture de réseau(x) ou à un type de lien(s) de communication pour la communication de données entre un équipement terminal (2a, 2b, 2c, 2d, 2e) et un nœud concentrateur (3) connecté à un réseau EPS (4).

En fonction du mode de réalisation choisi, le procédé proposé pourra être mis en œuvre pour l'authentification d'un équipement géré qui pourra, selon les cas, être un équipement concentrateur du type de celui (3) illustré sur la figure 1, et/ou un équipement terminal (2a, 2b, 2c, 2d, 2e) (par exemple un équipement IED) connecté à un réseau EPS éventuellement par le biais d'un concentrateur (3), comme illustré sur la figure 1. En fonction du mode de réalisation, un équipement dont l'authentification pourra être gérée par le procédé proposé pourra être un équipement terminal, tel qu'un équipement indépendant placé dans un bâtiment (par ex. une habitation), comme par exemple un compteur électrique comptant une quantité de flux ou de sous-flux électrique, ou un équipement d'un ensemble plus important, logé dans un poste source par exemple, dans un quartier d'habitation par exemple ou en zone rurale ou semi-rurale, et permettant de piloter des appareils électriques de mesure ou de sécurité tels que des interrupteurs ou des disjoncteurs. Un équipement terminal pourra par exemple être un équipement de type IED.

Le procédé proposé tire avantage de l'utilisation d'une fonction de sécurité dans les réseaux de type EPS prévue pour sécuriser les communications de données au sein du réseau.

Un exemple de mise en œuvre d'une fonction de sécurité dans un réseau de type EPS est décrit ci-après, dans un réseau EPS tel que celui illustré sur la figure 1, dans un ou plusieurs modes de réalisation.

La figure 2a illustre un exemple d'architecture de réseau pour la mise en œuvre du procédé proposé selon un ou plusieurs modes de réalisation.

En référence à la figure 2a, un réseau EPS (4) comprend un réseau d'accès (4a) connecté à un réseau cœur (4b). Dans un ou plusieurs modes de réalisation, le réseau d'accès peut comprendre un ou plusieurs réseau d'accès radio 4G et/ou 4G+, incluant par exemple un réseau d'accès radio de type LTE (EUTRAN, pour « Evolved UMTS Terrestrial Radio Access Network »), un ou plusieurs réseau d'accès radio 3G et/ou 3G+, incluant par exemple un réseau d'accès radio de type UMTS (UTRAN, pour « UMTS Terrestrial Radio Access Network »), un ou plusieurs réseaux d'accès radio 2G, incluant par exemple un réseau d'accès radio de type GSM (pour « Global System for Mobile communications), GPRS (pour « General Packet Radio Service ») et/ou EDGE (pour « Enhanced Data Rates for Global Evolution ») (tel qu'un réseau GERAN, pour « GSM EDGE Radio Access Network »), ou une combinaison de ces différents types de réseau d'accès radio.

Dans un ou plusieurs modes de réalisation, le réseau cœur (4b) peut être du type EPC (pour « Evolved Packet Core »), et être connecté à un ou plusieurs réseaux d'accès d'une part, et à un ou plusieurs réseaux de communication de données extérieurs (9), qui peuvent éventuellement comprendre un ou plusieurs réseaux IMS (pour « IP Multimedia Subsystem ») (9a) de fourniture de services IP par l'opérateur du réseau cœur (4b), d'autre part. Un ou plusieurs équipements utilisateur (8), comme par exemple le concentrateur (3) et/ou un ou plusieurs des équipements terminaux (2a, 2b, 2c, 2d, 2e) de la figure 1, sont configurés pour des communications de données par voie radio via un ou plusieurs des réseaux d'accès radio (4a).

Le réseau cœur EPC (4b) peut comprendre les entités fonctionnelles suivantes : une fonction de gestion de la mobilité des équipements utilisateur dans le réseau EPS (MME, pour « Mobility Management Entity »), une fonction de passerelle de service de réseau cœur 2G/3G (SGSN, pour « Serving gateway Support Node »), une fonction de passerelle de service LTE (SGW, pour « Serving GateWay »), une fonction de passerelle vers les réseaux extérieurs (PDN-GW, pour « Packet Data Network »), et une fonction base de données d'utilisateurs et d'abonnés (HSS, pour « Home Subscriber Server »).

L'interface entre l'UTRAN et le SGSN peut être de type Iu spécifié par le 3GPP, l'interface entre le SGSN et le MME peut être de type S3 spécifié par le 3GPP, l'interface pour le plan utilisateur (trafic de données) entre le SGW et l'E-UTRAN peut être de type S1-U spécifié par le 3GPP, l'interface pour le plan de contrôle (trafic de signalisation) entre le MME et l'E-UTRAN peut être de type S1-C spécifié par le 3GPP, l'interface entre le MME et l'HSS peut être de type S6a spécifié par le 3GPP, l'interface entre le SGSN et le SGW peut être de type S4 spécifié par le 3GPP, l'interface entre le SGW et le PDN-GW peut être de type S5 spécifié par le 3GPP, l'interface pour le plan de contrôle entre le MME et le SGW peut être de type S11 spécifié par le 3GPP, et l'interface entre le PDN-GW et les réseaux extérieurs peut être de type SGi spécifié par le 3GPP.

Dans le plan utilisateur (trafic de données), les données utilisateur transmises par le réseau d'accès E-UTRAN rencontrent donc la passerelle SGW avant d'être dirigées vers le PDN-GW puis vers les réseaux extérieurs (9).

On pourra se reporter aux spécifications techniques du 3GPP pour une description détaillée de ces entités fonctionnelles, de ces interfaces, et des protocoles qui peuvent être utilisé pour leur mise en œuvre. L'homme du métier comprendra toutefois que les procédés, systèmes et dispositifs proposés dans la présente description ne sont pas limités à un type particulier de réseau d'accès (par exemple à un type particulier de réseau d'accès 3GPP ou à une génération particulière de réseau 3GPP), ou à un type particulier de réseau PDN (ou un type particulier de réseau IP), mais peuvent être mis en œuvre avec tout type de réseau d'accès utilisant une première fonction de sécurité, notamment pour l'accès au réseau, et tout type de réseau de communication de données utilisant une deuxième fonction de sécurité, notamment pour l'accès au réseau. En particulier, dans un ou plusieurs modes de réalisation, le réseau d'accès pourra être de type WiFi configuré en mode réseau « ad-hoc », ce qui présente l'avantage de bénéficier d'une authentification de type EAP (de l'anglais « Extensible Authentication Protocol »), selon la spécification technique RFC4187. Les mécanismes d'authentification initiaux du 3GPP (appelés « AKA », pour « Authentification and Key Agreement ») ont en effet été adaptés pour les rendre compatibles avec l'ensemble des normes IEEE 802.11 relatives aux réseaux sans fil locaux (WiFi), ce qui a conduit à la spécification de l'authentification EAP-AKA, une méthode d'authentification EAP utilisables par des terminaux utilisateurs de réseaux sans-fil (comme par exemple les réseaux 3G UMTS et CDMA2000 et 4G comme LTE). La méthode d'authentification EAP-AKA permet notamment à des équipements dotés d'un module SIM de s'authentifier sur les liaisons IEEE-802 non pas avec un simple mot de passe, mais avec les éléments de sécurité du module SIM dont ils sont dotés. Sa mise en œuvre implique en général que le point d'accès radio soit connecté à un serveur Radius (de l'anglais « Remote Authentification Dial-In User Service ») qui a lui-même accès au HSS.

La figure 2b illustre un exemple de fonction de sécurité dans un réseau EPS pour la protection du plan utilisateur.

En référence à la figure 2b, des données utilisateurs sont transmises entre un équipement utilisateur (8) et une passerelle SGW (4b1) d'un réseau cœur EPC par l'intermédiaire d'un réseau d'accès radio de type E-UTRAN (4a1). La figure 2b illustre en outre des exemples de piles de protocoles (selon une architecture en couches protocolaires) qui peuvent être utilisés par l'UE (8), les nœuds du réseau E-UTRAN (4a1) (typiquement du type station de base, ou « eNB »), et la passerelle SGW (4b1). Les données sont transmises par la couche applicative « app », qui n'existe dans l'illustration de la figure 2b qu'au sein de l'équipement utilisateur, à une couche inférieure d'un protocole de mise en forme des paquets, dans l'exemple illustré le protocole PDCP. Les couches protocolaires inférieures au niveau transport ne sont par ailleurs pas représentées sur la figure 2b.

Comme illustré sur la figure 2b, une première fonction de sécurité est utilisée pour sécuriser les communications de données sur l'interface air entre l'entité PDCP de l'UE (8) et l'entité correspondante du nœud de l'E-UTRAN (4a1) avec lequel l'UE (8) échange des données sur l'interface air. Une deuxième fonction de sécurité (dite « fonction de sécurité IP ») est utilisée pour sécuriser la connexion IP entre la couche IP mise en œuvre par un nœud de l'E-UTRAN (4a1) et la couche IP mise en œuvre par le SGW (4b1) pour les communications de données de la couche applicative « appli » de l'UE (8). Cette fonction de sécurité IP est mise en œuvre en utilisant le protocole IPsec (de l'anglais « Internet Protocol Security »), décrit dans la spécification RFC 2401, qui permet, en fonctionnement dans un mode d'encapsulation des paquets IP appelé « tunneling », d'établir une communication sécurisée entre des entités en créant des tunnels entre ces entités.

Les couches protocolaires de niveau 1 et 2 du modèle OSI, non représentées sur la figure 2b, peuvent aussi utiliser une fonction de sécurité

On peut donc typiquement trouver trois niveaux de sécurisation des communications de données pour la protection du plan utilisateur entre un équipement utilisateur (8) et un SGW (4b1) d'un réseau cœur EPC, par exemple par le biais d'une authentification, d'un chiffrement et/ou d'une vérification d'intégrité sur chacun de ces trois niveaux. En référence à la figure 1, les communications entre un équipement IED et un serveur applicatif (6) utilisant un réseau EPS (4) peuvent utiliser ces trois niveaux de sécurisation des communications, pour le tronçon de communication de données entre l'équipement IED et le réseau EPS (4) utilisé.

Les fonctions de sécurité utilisées dans un réseau EPS sont typiquement, pour l'essentiel, basées sur les mécanismes à clés secrètes connues par le HSS du réseau EPS. C'est le domaine de la cryptographie symétrique, aussi dite « à clé secrète ». La cryptographie symétrique utilise une même clé pour le chiffrement et le déchiffrement de messages à protéger. La sécurité de l'échange de messages ou de données est assurée par le fait que seuls l'expéditeur et le destinataire connaissent la clé, qui est donc secrète. Ce type de cryptographie a le mérite d'avoir été reconduit dans les réseaux de télécommunication sans fil, et notamment les réseaux 3GPP, de génération technologique en génération technologique, et permet de bénéficier d'un grand nombre de fonctions de sécurité normalisées. Ainsi, la dotation d'un module SIM (de l'anglais « Subscriber Identity Module ») (par exemple sous la forme d'une carte SIM ou d'un module eSIM) à un équipement permet la mise en œuvre des fonctions prévues par les standards 3GPP, en particulier celles de cyber-sécurité qui incluent l'authentification, l'attachement au réseau (en anglais «Network attachement ») et le chiffrage intégrité. Le chiffrement ayant lieu très tôt dans l'établissement des protocoles, même la lecture malicieuse d'identifiants est ainsi rendue compliquée.

Dans un ou plusieurs modes de réalisation, le procédé proposé peut être mis en œuvre pour l'authentification d'un équipement géré doté d'un premier module de sécurité, dit « module de sécurité EPS », comprenant des données de sécurité de type clé de chiffrement pour la mise en œuvre d'une ou plusieurs des fonctions de sécurité utilisées dans le réseau de communication de type EPS auquel l'équipement géré est amené à se connecter pour des échanges de données avec un serveur applicatif. Dans un ou plusieurs modes de réalisation les données de sécurité de type clé de chiffrement du module de sécurité EPS peuvent être de type clé secrète, par exemple incorporée dans module SIM (matérialisé ou dématérialisé), ou un module embarquant des fonctionnalités de sécurité similaires à celles d'un module SIM. Par exemple, le module de sécurité peut être une carte (en anglais « Universal Integrated Circuit Card » ou « UICC ») comprenant des données de sécurité et configurée pour la mise en œuvre d'une application SIM (matérialisée ou dématérialisée), telle que spécifiée dans la spécification 3GPP TS 51.011 pour les réseaux de type GSM, ou d'une application USIM, définies dans les spécifications 3GPP TS 31.102 et TS 21.111, pour les réseaux GSM, EDGE, UMTS et/ou LTE, en fonction du mode de réalisation choisi.

A nouveau en référence à la figure 1, il est en outre envisagé que, dans un ou plusieurs modes de réalisation, l'équipement géré (2a-2e et/ou 3), dont l'authentification pour l'accès au serveur applicatif (6) est gérée par la mise en œuvre du procédé proposé, échange des données avec un serveur applicatif au travers d'un réseau de type EPS (4) et d'un réseau de communication de paquets (9), comme par exemple un réseau IP, dans le cadre d'une ou plusieurs applications de fourniture de service. L'accès à de telles applications pourra typiquement être sécurisé par des fonctions de sécurité, par exemple utilisant des mécanismes de cryptographie asymétrique et des protocoles de sécurisation des communications de données sur le réseau Internet, tels que, par exemple, les protocoles SSL (de l'anglais « Secure Socket Layer ») et/ou TLS (de l'anglais « Transport Layer Security »).

Dans un ou plusieurs modes de réalisation, les communications de données dans le réseau IP pourront être sécurisées par un mécanisme de chiffrement à clé publique et privée, utilisé par exemple pour le chiffrement des données transitant sur le réseau et/ou pour l'authentification d'un utilisateur. Le chiffrement de données pourra être effectué en utilisant la clé publique du destinataire, le destinataire utilisant sa clé privée pour le déchiffrement des données. L'authentification d'un expéditeur de données pourra être effectuée par chiffrement de données par l'expéditeur en utilisant sa clé privée, le destinataire utilisant la clé privée de l'expéditeur pour le déchiffrement des données.

Dans un ou plusieurs modes de réalisation, la sécurisation des échanges de données par cryptographie asymétrique pourra utiliser des certificats numériques qui contiennent la clé publique de l'entité associée au certificat pour chiffrer ou authentifier des liens de communication sans partage préalable d'une clé commune. Une infrastructure à clés publiques (en anglais, « Public Key Infrastructure » ou « PKI ») pourra être utilisée pour gérer l'authentification et la signature numérique d'une ou plusieurs entités fonctionnelles ou d'un ou plusieurs équipements du réseau.

Dans un ou plusieurs modes de réalisation, une ou plusieurs applications de type Web ou IP, déployées par des entreprises de fourniture de service opérant un réseau comprenant un ou plusieurs réseaux de communication de données par paquets de type réseaux IP, pourront être exécutées en mode client-serveur dans l'équipement géré. Avantageusement, des applications de traitement de données (en anglais, « data analytics »), des applications de supervision (par exemple maintenance, téléchargement, etc.), et/ou des applications commerciales (par exemple de type « blockchain ») pourront par exemple être mises en œuvre au sein d'un ou de plusieurs serveurs applicatifs configurés pour effectuer des mesures ou des calculs localement afin d'éviter de surcharger les réseaux en termes de remontée d'information.

Dans un ou plusieurs modes de réalisation, la mise en œuvre sécurisée de ces applications par un opérateur de service pourra reposer dans le monde Internet sur une infrastructure de gestion des clés de type PKI configurée pour gérer les clés publiques qu'il distribue aux équipements, généralement sous la forme de certificats. Gérer ou « manager » signifie ici déployer des procédures permettant de générer, allouer, stocker, détruire, changer, révoquer les clés publiques permettant de procéder la mise œuvre des fonctions d'authentification, chiffrage et intégrité au niveau applicatif par des mécanismes à clés publiques, tels que, par exemple, les mécanismes de gestion des certificats X509. Par exemple, un opérateur de service, mettant par exemple en œuvre des fonctions de pilotage « métier » de son réseau (par exemple un réseau de distribution d'énergie) pourra être propriétaire d'une infrastructure de réseau de type EPS ou équivalent (comme par exemple tout réseau conforme aux normes spécifiées par l'organisation 3GPP, en particulier sur le segment réseau d'accès et jusqu'à la passerelle d'accès (par exemple un SGW) au réseau Internet ou plus généralement à un réseau PDN (par exemple un réseau IP)). Plusieurs cas de figure sont envisageables à cet égard : par exemple, l'opérateur pourra utiliser le réseau IP, avec ce qu'il obtiendra de garanties en termes de latence, bande passante (régie par la qualité de service de l'Internet) mais aussi de redondance. L'opérateur pourra aussi utiliser, le cas échéant, son centre de contrôle (SCADA, de l'anglais « Supervisory control and data acquisition ») de réseau à fibres optiques et/ou des lignes qui lui seront propres.

Dans un ou plusieurs modes de réalisation, il est proposé de doter un équipement géré d'un deuxième module de sécurité, dit « module de sécurité IP », comprenant des données de sécurité de type clé de chiffrement pour la mise en œuvre d'une ou plusieurs des fonctions de sécurité utilisées dans le ou les réseaux de communication de données IP dans lesquels des données échangés par l'équipement géré et un serveur applicatif d'un réseau de communication de données IP transitent. Dans un ou plusieurs modes de réalisation les données de sécurité de type clé de chiffrement du module de sécurité IP peuvent être de type clé publique, par exemple sous forme d'un certificat, ou d'un équivalent de certificat.

Dans un ou plusieurs modes de réalisation, il est ainsi proposé de doter un équipement géré d'un module de sécurité IP et d'un module de sécurité EPS. Par exemple, un équipement géré peut incorporer des données de type clé secrète, par exemple au sein d'un module SIM pour la connexion avec un réseau EPS, et des données de type clé publique pour la connexion avec le niveau application des réseaux de services de type IP.

La figure 2c illustre un exemple d'architecture de système pour la mise en œuvre du procédé proposé selon un ou plusieurs modes de réalisation.

En référence à la figure 2c, un noeud IED (2) est connecté à un réseau de télécommunications de type EPS (4) interconnecté à un réseau de communication de données (5). L'ensemble réseau de télécommunications de type EPS (4) interconnecté à un réseau de communication de données (5) peut correspondre, dans un ou plusieurs modes de réalisation, à un réseau (11) opéré par une entreprise de fourniture de service, qui peut par exemple, selon les cas de figure, être propriétaire ou locataire des infrastructures du réseau. L'opérateur de réseau peut fournir aux abonnés de son service un équipement IED de type celui illustré sur la figure, configuré pour effectuer des communications de données avec un serveur applicatif (6) (par exemple un serveur applicatif métier de pilotage du réseau de distribution électrique) connecté au réseau (11) sécurisées selon le procédé proposé, par exemple dans le cadre de la fourniture de service par l'entreprise à ses clients.

Dans un ou plusieurs modes de réalisation, le noeud IED (2) peut être doté d'un module de sécurité IP et d'un module de sécurité EPS (par exemple un module SIM) comme discuté ci-dessus.

Le procédé proposé peut être mis en œuvre, dans un ou plusieurs modes de réalisation, par une unité de gestion d'authentification, qui pourra elle-même être mise en oeuvre au sein d'un nœud (10a) du réseau (11), appelé « serveur Smartgrid » ou « Smartgrid GW ».

Dans un ou plusieurs modes de réalisation, le nœud Smartgrid GW (10a) peut comprendre, ou, en fonction du mode de réalisation, être connecté à, une infrastructure de gestion de clés (non représentée sur la figure), appelée « PKE-Energie », ou « PKI-E », configurée pour la gestion des certificats à destination des nœuds (IED, SM, etc.) du réseau (11). Ainsi, le noeud Smartgrid GW (10a) peut être connecté au réseau de données (5), et l'unité de gestion d'authentification selon le procédé proposé configurée pour communiquer avec une fonction de sécurité (par exemple l'infrastructure de gestion de clés « PKI-E ») utilisée pour sécuriser les communications de données du réseau de communication de données (5). Ce lien de communication pourra avantageusement être lui-même sécurisé, par exemple en utilisant une architecture dans laquelle l'unité de gestion d'authentification et la fonction de sécurité du réseau (5) sont co-localisées, comme décrit ci-dessus.

Dans un ou plusieurs modes de réalisation, le noeud Smartgrid GW (10a) peut en outre être connecté au réseau de télécommunications de type EPS (4), par exemple au premier serveur du réseau EPS (4) rencontré par le trafic, par exemple par un tunnel sécurisé. Par exemple, en référence à la figure 2a, le noeud Smartgrid GW (10a) pourra être connecté à la passerelle SGW dans un ou plusieurs modes de réalisation.

Le noeud Smartgrid GW (10a) pourra ainsi être configuré, dans un ou plusieurs modes de réalisation, pour fournir, outre une fonction de gestion d'authentification pour l'accès au serveur applicatif (6) selon le procédé proposé, une fonction de sécurité pour sécuriser les communications de données du réseau de communication de données (5). En particulier, le noeud Smartgrid GW (10a) pourra être configuré pour gérer de manière applicative les certificats à destinations des nœuds (IED, SM...) et pour fournir à des applications sécurisées le matériel cryptographique nécessaire à la création de liens sécurisés. Notons qu'alors, un certificat qu'on ferait parvenir à un nœud du réseau bénéficierait d'un cryptage/intégrité triple (triplement encapsulé) entre l'équipement et l'infrastructure « PKI-Energie ».

Dans un ou plusieurs modes de réalisation, le noeud Smartgrid GW (10a) pourra donc être configuré pour assurer une fonction de gestion de l'authentification selon le procédé proposé mise en œuvre au sein d'une unité de gestion d'authentification, et pour ce faire être connecté au réseau de communications de données (5) et au réseau d'accès (4).

En outre, dans un ou plusieurs modes de réalisation, le noeud « Smartgrid GW » (10a) et le HSS du réseau EPS (4) pourront être configurés pour communiquer avec une base de données, dite de cohérence (ou en anglais, « consistency ») configurée avec des appairages d'identifiants correspondants au nœud IED (2) (par exemple des paires IMSI - clé publique comme décrit ci-dessous), éventuellement par le biais d'un serveur dédié, dit serveur de cohérence (non représenté sur la figure). Par exemple, le noeud « Smartgrid GW » et le HSS du réseau EPS (4) pourront être configurés pour se connecter à la base de données de cohérence, interroger cette base et/ou recevoir des données (par exemple des alertes sur des requêtes d'accès frauduleuses ou des historiques de requêtes d'accès au serveur applicatif) de la base de données. Cela permet avantageusement de faire communiquer des fonctions de sécurité du réseau d'accès et du réseau PDN, par le biais par exemple de la base de données ou du serveur de cohérence, pour le contrôle d'accès au serveur applicatif selon le procédé proposé. En outre, la base de données de cohérence peut alors informer le HSS par exemple de l'historique frauduleux des tentatives d'authentification d'un équipement géré malveillant sur le réseau de données (5), afin de bloquer l'authentification sur le réseau d'accès (4). En fonction du mode de réalisation choisi, l'unité de gestion d'authentification (Smartgrid GW) et le serveur de cohérence pourront être mis en œuvre dans une pluralité de nœuds distincts du réseau (11), ou dans un seul nœud. De plus, le nœud Smartgrid GW (10a) pourra être configuré pour embarquer une fonction de gestion d'authentification pour l'accès au serveur applicatif selon le procédé proposé, et pour en outre embarquer un serveur d'authentification du deuxième réseau (réseau de communication de données (5)) et/ou un serveur de cohérence pour l'accès à la base de données. L'homme du métier comprendra que les systèmes, équipements et unités proposés ne sont pas limités à une architecture particulière pour la mise en œuvre du procédé proposé.

On décrit ci-après des procédés de gestion d'authentification d'un équipement dans un système tel que celui illustré sur la figure 1, dans un ou plusieurs modes de réalisation.

En référence à la figure 3, on envisage un système de communication de données comprenant un premier réseau de communication de données, comme par exemple un réseau de communication de données de type EPS, utilisant une première fonction de sécurité pour sécuriser les communications de données au sein du premier réseau, comme par exemple une infrastructure de chiffrement symétrique dans le cas d'un réseau EPS.

Ce premier réseau de communication de données peut être couplé de manière opérationnelle à un deuxième réseau de communication de données, comme par exemple un réseau de communication de données de type réseau IP, utilisant une deuxième fonction de sécurité pour sécuriser les communications de données au sein du deuxième réseau, comme par exemple une infrastructure de chiffrement asymétrique de type PKI dans le cas d'un réseau IP. Le premier et le deuxième réseau de communication de données sont ainsi interconnectés pour l'échange de données, notamment pour les requêtes d'accès émises par un équipement géré pour l'accès à un serveur applicatif par le biais des premier et deuxième réseaux. Par exemple, le premier réseau sera typiquement un réseau d'accès sans fil (par exemple de type 3GPP) auquel l'équipement géré s'est connecté pour émettre une requête d'accès à un serveur applicatif connecté au deuxième réseau, qui pourra typiquement être un réseau PDN (par exemple un réseau IP). Dans un ou plusieurs modes de réalisation, une requête d'accès de l'équipement géré donnera lieu pour être traitée à la mise en œuvre de première et/ou deuxième fonctions de sécurité utilisées respectivement par les premier et deuxième réseaux pour l'authentification, et donc à des requêtes d'authentification de l'équipement géré selon la première et/ou deuxième fonction de sécurité.

Dans un ou plusieurs modes de réalisation, la gestion d'authentification d'un équipement du système de communication de données pour l'échange de données entre l'équipement et un serveur applicatif du système peut comprendre, dans une unité de gestion d'authentification mise en œuvre dans un nœud du deuxième réseau de communication, la réception (50) d'une requête d'authentification de l'équipement selon la deuxième fonction de sécurité pour l'accès au serveur applicatif.

Suite à la réception de la requête d'authentification de l'équipement, l'unité de gestion d'authentification peut être configuré pour déterminer (51) si un identifiant de l'équipement dans le premier réseau de communication a été reçu suite à la réception d'une autre requête d'authentification de l'équipement selon la première fonction de sécurité. Dans le cas où le premier réseau de communication de données est de type EPS (par exemple un réseau 3GPP de type GSM, GPRS, EDGE, UMTS, HSPA, LTE, LTE-A et/ou 5G), l'identifiant de l'équipement objet de la détermination (51) peut par exemple être de type identifiant international d'abonné mobile (en anglais « International Mobile Subscriber Identity », ou « IMSI »), ou tout autre identifiant unique utilisé par l'équipement pour l'accès au réseau EPS.

L'unité de gestion d'authentification peut en outre être configuré pour générer (52) une réponse d'échec d'authentification de l'équipement lorsque l'identifiant de l'équipement n'a pas été reçu.

Le procédé proposé utilise ainsi avantageusement deux fonctions de sécurité associées respectivement à des premier et deuxième réseaux de communication de données d'un système de communication de données pour la gestion de l'authentification d'un équipement du système pour sécuriser l'échange de données avec un serveur applicatif du système. Le procédé proposé permet en particulier avantageusement de se défendre contre des attaques de sécurité consistant en des requêtes d'authentification selon une fonction de sécurité du deuxième réseau émanant d'équipements frauduleux ou piratés. En effet, dans le mode nominal d'authentification pour l'échange de données entre un équipement du système et un serveur applicatif du deuxième réseau, l'équipement s'authentifie selon la fonction de sécurité du premier réseau afin d'établir un lien de communication dans le premier réseau, les données à échanger avec le serveur applicatif devant transiter par le premier réseau de communication. L'authentification de l'équipement selon la fonction de sécurité du premier réseau conduisant l'équipement à fournir un identifiant dans le premier réseau, la combinaison des fonctions de sécurité associées respectivement à des premier et deuxième réseaux de communication de données peut comprendre la centralisation du traitement des requêtes d'authentification (selon les première et deuxième fonctions de sécurité) au sein d'une même entité de sécurité, par exemple mise en œuvre dans une unité de gestion d'authentification du système qui est un nœud du deuxième réseau de communication. Ainsi, une requête frauduleuse d'authentification selon la deuxième fonction de sécurité émanant d'un équipement douteux pourra être détectée et rejetée lorsque l'équipement n'a pas auparavant fourni à l'entité de sécurité un identifiant du premier réseau de communication dans le cadre d'une requête d'authentification selon la première fonction de sécurité.

Dans un ou plusieurs modes de réalisation, la gestion d'authentification d'un équipement du système de communication de données pour l'échange de données entre l'équipement et le serveur applicatif peut comprendre, à l'unité de gestion d'authentification du système, la réception (50) d'une requête d'authentification de l'équipement selon la première fonction de sécurité pour l'accès au serveur applicatif, la requête utilisant un identifiant de l'équipement dans le premier réseau de communication.

En référence à la figure 2c, l'unité de gestion d'authentification «Smartgrid GW» (10a) peut être configurée pour recevoir les requêtes d'authentification du nœud IED (2) selon la fonction de sécurité mise en œuvre par le réseau EPS (4) effectuées par le nœud (2) pour avoir accès au serveur (6) par le biais d'une connexion au réseau EPS (4). Dans un ou plusieurs modes de réalisation, les requêtes d'authentification de l'équipement IED (2) selon la fonction de sécurité mise en œuvre par le réseau EPS (4) peuvent comprendre un identifiant de l'équipement IED (2) utilisé pour sa requête, comme par exemple un identifiant d'abonné IMSI de l'équipement IED (2) lorsque celui-ci est doté d'un module d'identification d'abonné de type SIM. L'unité de gestion d'authentification «Smartgrid GW» (10a) peut ainsi être configurée pour obtenir l'identifiant de l'équipement IED (2) utilisé pour formuler la requête d'authentification dans le réseau EPS (4) et mettre en mémoire cet identifiant afin d'effectuer la détermination de réception d'identifiant dans le premier réseau suite à la réception d'une requête d'authentification de l'équipement IED (2) dans le deuxième réseau, comme décrit ci-dessus.

Dans un ou plusieurs modes de réalisation, le système proposé peut en outre comprendre une base de données préconfigurée avec une correspondance entre l'identifiant de l'équipement IED dans le premier réseau et un élément de sécurité de la deuxième fonction de sécurité pour des requêtes d'authentification de l'équipement selon la deuxième fonction adressées au deuxième réseau.

Le procédé proposé pourra alors comprendre, dans un ou plusieurs modes de réalisation, l'envoi à la base de données de cohérence d'une requête de vérification d'enregistrement dans la base de données de l'identifiant reçu, la requête comprenant l'identifiant reçu.

En référence à la figure 2c, le système proposé peut comprendre, dans un ou plusieurs modes de réalisation, la base de données de cohérence (10b), et l'unité de gestion d'authentification «Smartgrid GW» (10a) peut être configurée pour interroger la base de données de cohérence (10b) suite à réception d'une requête d'authentification selon la fonction de sécurité mise en œuvre par le réseau EPS (4) et/ou d'une requête d'authentification selon la fonction de sécurité mise en œuvre par le réseau PDN (5).

L'unité de gestion d'authentification «Smartgrid GW» (10a) pourra ainsi interroger la base de données de cohérence (10b) avec l'identifiant de l'équipement IED (2) reçu par le biais de la requête d'authentification de l'équipement IED (2) dans le réseau EPS (4) afin de vérifier que cet identifiant est bien préconfiguré dans la base de données de cohérence (10b).

Cet aspect du procédé proposé permet avantageusement de se défendre contre des attaques d'équipements qui parviennent à émettre frauduleusement une requête d'authentification dans le réseau EPS (4) avec un identifiant volé. La vérification de cohérence effectuée avec la base de données de cohérence qui est configurée avec des identifiants d'équipements non frauduleux permet en effet de rejeter les demandes d'authentification émanant d'équipements qui ne présentent pas un identifiant déjà consigné dans la base de données de cohérence.

Par exemple, la base de données de cohérence (10b) peut comprendre, par pré-configuration pour chaque équipement IED géré selon le procédé proposé, un identifiant de l'équipement IED (2), comme par exemple un identifiant d'abonné IMSI de l'équipement IED (2) mis en correspondance avec un élément de sécurité de la fonction de sécurité mise en œuvre par le réseau PDN (5). Cet élément de sécurité pourra par exemple être une clé publique, dans les cas de figure où un mécanisme de chiffrement à clé publique et privée est utilisé pour l'authentification d'un équipement dans le réseau PDN (5), ou un certificat numérique contenant une clé publique et délivré par une infrastructure PKI utilisée pour gérer l'authentification dans le réseau PDN (5). L'unité de gestion d'authentification «Smartgrid GW» (10a) peut ainsi être configurée pour interroger la base de données de cohérence (10b) avec l'IMSI de l'équipement IED (2) reçu par le biais de la requête d'authentification de l'équipement IED (2) dans le réseau EPS (4) afin de vérifier que cet IMSI est bien préconfiguré dans la base de données de cohérence (10b), en correspondance avec une clé publique pour l'équipement IED (2).

Dans un ou plusieurs modes de réalisation, le procédé proposé pourra comprendre en outre la gestion de différents cas d'échec de l'authentification de l'équipement IED. Ces cas d'échec pourront notamment inclure la réception par l'unité de gestion d'authentification «Smartgrid GW» (10a) d'une réponse d'absence dans la base de données de cohérence d'un enregistrement de l'identifiant reçu (par exemple l'absence d'enregistrement de l'identifiant IMSI reçu par l'unité de gestion d'authentification «Smartgrid GW» (10a)), et/ou la réception par l'unité de gestion d'authentification «Smartgrid GW» (10a) d'une réponse indiquant une anomalie relative à une ou plusieurs requêtes d'authentification précédentes de l'équipement selon la première fonction de sécurité au premier réseau de communication et/ou selon la deuxième fonction de sécurité au deuxième réseau de communication. Par exemple, dans un ou plusieurs modes de réalisation, un historique relatif aux requêtes d'authentification précédemment présentées par l'équipement IED pourra être sauvegardé, par exemple dans la base de données de cohérence, en lien avec l'équipement IED, afin de pouvoir confronter une nouvelle requête d'authentification reçue pour l'équipement IED à cet historique. Dans un ou plusieurs modes de réalisation, l'historique d'authentification pour un équipement IED pourra conserver toute anomalie relative à une précédente requête d'authentification, que cette anomalie soit relative à une authentification selon la fonction de sécurité du réseau EPS et/ou à une authentification selon la fonction de sécurité du réseau PDN. Sur réception d'une requête d'authentification pour un équipement IED, la base de données de cohérence peut ainsi être interrogée pour déterminer si l'historique de l'équipement IED contient au moins une anomalie, ou pour déterminer le nombre d'anomalies conservées dans l'historique pour cet équipement IED.

Différents critères de gestion d'échec d'authentification peuvent être appliqués en fonction du mode de réalisation, et une réponse d'échec d'authentification de l'équipement IED pourra être générée si un ou plusieurs de ces critères sont remplis. Par exemple, une réponse d'échec d'authentification pourra être générée lorsque le nombre d'anomalies d'authentification contenues dans l'historique d'authentification de l'équipement IED est supérieur à un seuil prédéterminé (qui pourra être configuré à la valeur 0). Par exemple, une réponse d'échec d'authentification pourra être générée lorsque le nombre d'anomalies d'authentification contenues dans l'historique d'authentification de l'équipement IED pour la fonction de sécurité du réseau EPS ou la fonction de sécurité du réseau PDN est supérieur à un seuil prédéterminé respectif (les seuils respectifs pourront être configurés à des valeurs distinctes, et l'un des seuil pourra être configuré à la valeur 0 (pour l'une des fonctions), tandis que l'autre pourra être configuré à une valeur non nulle (pour l'autre fonction)).

Ainsi, la sécurité de l'authentification de l'équipement IED pourra être avantageusement renforcée, en générant une réponse d'échec d'authentification sur la base de l'absence d'enregistrement relatif à l'équipement IED dans la base de données de cohérence, et/ou sur la base d'un historique d'authentification pour l'équipement IED, qui pourra être aussi conservé dans la base de données de cohérence, relatif à l'une et ou l'autre des fonctions de sécurité utilisées par les deux réseaux utilisés pour l'échange de données entre l'équipement IED et le serveur applicatif.

Une base de données telle que la base de données de cohérence décrite ci-dessus pourra être utilisée, dans un ou plusieurs modes de réalisation, pour renforcer la sécurité de l'authentification dans le deuxième réseau, qui pourra typiquement être un réseau PDN, par exemple de type IP.

Dans un ou plusieurs modes de réalisation, une base de données préconfigurée avec une correspondance entre un identifiant d'un équipement IED dans un premier réseau (par exemple un identifiant IMSI de l'équipement IED dans un réseau 3GPP (par exemple 5G)) et un élément de sécurité de la fonction de sécurité d'un deuxième réseau (par exemple une clé publique utilisée pour l'authentification dans un réseau PDN (par exemple IP)) pour des requêtes d'authentification de l'équipement IED selon la deuxième fonction adressées au deuxième réseau, telle que la base de données de cohérence décrite ci-dessus et illustrée sur la figure 2c, pourra ainsi être utilisée pour valider ou invalider une requête d'authentification reçue pour un équipement IED. Ce traitement d'une requête d'authentification reçue pour un équipement IED pourra comprendre, lorsque la requête d'authentification est relative à une authentification dans le deuxième réseau et utilise l'élément de sécurité, l'envoi à la base de données d'une requête de vérification d'enregistrement dans la base de données de l'identifiant reçu en correspondance avec l'élément de sécurité reçu, la requête comprenant l'identifiant reçu et l'élément de sécurité reçu.

Ainsi, dans un ou plusieurs modes de réalisation, en référence à la figure 2c, l'unité de gestion d'authentification «Smartgrid GW» (10a) pourra être configurée pour interroger la base de données de cohérence (10b), sur la base d'une requête d'authentification de l'équipement IED (2) dans le réseau PDN (5) reçue et qui aura été précédée d'une requête d'authentification de l'équipement IED (2) dans le réseau EPS (4). L'unité de gestion d'authentification «Smartgrid GW» (10a) peut être configurée pour obtenir, sur la base de la requête d'authentification de l'équipement IED (2) dans le réseau EPS (4), un identifiant de l'équipement IED dans le réseau EPS (4) (par exemple un identifiant IMSI), et sur la base de la requête d'authentification de l'équipement IED (2) dans le réseau PDN (5), un élément de sécurité de la fonction de sécurité mis en œuvre pour l'authentification dans le réseau PDN (5). Ainsi, l'unité de gestion d'authentification «Smartgrid GW» (10a) pourra être configurée pour interroger la base de données de cohérence (10b) afin de déterminer si la base de données de cohérence contient un enregistrement de l'identifiant de l'équipement IED dans le réseau EPS (4) en correspondance avec l'élément de sécurité pour l'authentification dans le réseau PDN (5). Par exemple, l'unité de gestion d'authentification «Smartgrid GW» (10a) pourra interroger la base de données de cohérence (10b) pour vérifier qu'elle contient un enregistrement de l'IMSI de l'équipement IED (2) en correspondance avec la clé publique (par exemple le certificat) présentée par l'équipement IED (2) pour s'authentifier auprès du réseau PDN (5).

Dans les cas de figure où l'interrogation de la base de données de cohérence conduit à déterminer que celle-ci contient un enregistrement de l'identifiant de l'équipement IED dans le réseau EPS (4) en correspondance avec l'élément de sécurité pour l'authentification dans le réseau PDN (5), une réponse de succès de l'authentification de l'équipement IED pourra être générée pour valider l'authentification de l'équipement. A l'inverse, dans les cas de figure où l'interrogation de la base de données de cohérence conduit à déterminer que celle-ci ne contient pas d'enregistrement de l'identifiant de l'équipement IED dans le réseau EPS (4) en correspondance avec l'élément de sécurité pour l'authentification dans le réseau PDN (5), une réponse d'échec de l'authentification de l'équipement IED pourra être générée pour invalider ou refuser l'authentification de l'équipement IED. En référence à la figure 2c, l'interrogation de la base de données de cohérence (10b) pourra être effectuée par l'unité de gestion d'authentification «Smartgrid GW» (10a), et la réponse de succès d'authentification ou d'échec d'authentification de l'équipement IED (2) suite à l'interrogation de la base de données de cohérence (10b) pourra être générée par l'unité de gestion d'authentification «Smartgrid GW» (10a). Cette réponse d'authentification pourra être transmise, dans un ou plusieurs modes de réalisation, à l'équipement à l'origine de la requête, et pourra en outre être consignée dans la base de données de cohérence pour construire l'historique des requêtes d'authentification de l'équipement.

Dans un ou plusieurs modes de réalisation, le nœud de réseau configuré pour la mise en œuvre du procédé proposé pourra être configuré pour, dans un ou plusieurs des cas de figure décrits dans la présente description dans lesquels il est déterminé qu'une réponse de succès et/ou d'échec d'authentification doit être générée suite à une requête d'authentification pour l'équipement IED (en référence à l'architecture de la figure 2c, requête d'authentification dans le réseau EPS (4) ou requête d'authentification dans le réseau PDN (5) suivant une requête d'authentification dans le réseau EPS (4)), envoyer à la base de données de cohérence une requête d'enregistrement du résultat (échec ou succès) de la requête d'authentification pour l'équipement IED (2). Dans un ou plusieurs modes de réalisation, cette requête d'enregistrement du résultat ne pourra être envoyée que dans les cas où le résultat est un échec, ou dans seulement certains cas d'échec. Cela permet avantageusement de construire un historique d'authentification de l'équipement auprès du système, historique qui pourra être utilisé pour renforcer la sécurité de l'authentification des équipements dans le système, comme décrit ci-dessus.

Par exemple, en référence à la figure 2c, l'unité de gestion d'authentification «Smartgrid GW» (10a) pourra être configurée pour, dans les cas où il détermine un échec d'authentification de l'équipement IED (2), envoyer à la base de données de cohérence (10b) une requête d'enregistrement de l'échec d'authentification de l'équipement IED (2) en correspondance avec l'identifiant de l'IED (2) dans le réseau EPS (4) utilisé pour la requête d'authentification de l'équipement IED (2) dans le réseau EPS (4) et/ou avec l'élément de sécurité pour authentification dans le réseau PDN (5) utilisé pour la requête d'authentification de l'équipement IED (2) dans le réseau PDN (5).

Dans un ou plusieurs modes de réalisation, l'authentification d'un équipement (par exemple un équipement IED) pourra utiliser un temporisateur, qui sera initialisé à une durée prédéfinie (Tmax) et armé (démarré) sur réception d'une requête d'authentification de l'équipement selon la fonction de sécurité d'un premier réseau de communication. Par exemple, en référence à l'architecture de la figure 2c, un temporisateur pourra être armé sur réception d'une requête d'authentification de l'équipement IED (2) dans le réseau EPS (4), donnant lieu à la réception d'un identifiant de l'équipement IED (2) dans ce réseau (par exemple un identifiant IMSI).

Il pourra alors être déterminé, lorsqu'aucune requête d'authentification de l'équipement selon la deuxième fonction de sécurité du deuxième réseau de communication n'est reçue avant l'expiration du temporisateur, que la première requête d'authentification est en fait une attaque, ce qui pourra conduire à générer une réponse d'échec d'authentification de l'équipement.

Ces modes de réalisation permettront de protéger le système contre des attaques n'utilisant que la fonction d'authentification dans le premier réseau, sans pouvoir fournir les éléments nécessaires à une authentification dans le deuxième réseau, en combinant avantageusement les deux fonctions d'authentification respectivement utilisées dans le premier et le deuxième réseau. En effet, un équipement non frauduleux émettra une première requête d'authentification dans le premier réseau, pour la partie réseau d'accès sans fil des échanges de données avec le serveur applicatif. Si elle est acceptée, cette première requête conduira à une deuxième requête d'authentification, dans le deuxième réseau, pour la partie applicative des échanges de données avec le serveur applicatif, qui sera émise dans un intervalle de temps limité après la première requête d'authentification. Ainsi, un équipement IED (2) qui émet une requête d'authentification dans le deuxième réseau dans un laps de temps supérieur à un seuil prédéterminé après une requête d'authentification dans le premier réseau pourra être considéré comme frauduleux, et les requêtes d'authentification comme des attaques de sécurité. L'utilisation d'un temporisateur pour contrôler le temps passé entre la requête d'authentification dans le premier réseau et la requête d'authentification dans le deuxième réseau permet avantageusement de se défendre contre ce type d'attaques.

Dans un ou plusieurs modes de réalisation, l'équipement IED peut être muni d'un élément de sécurité initial, comme par exemple un élément de sécurité configuré par le fabricant lors de la fabrication de l'équipement IED. Cet élément de sécurité peut par exemple être une clé publique du fabricant de l'équipement IED, sous la forme d'un certificat utilisable pour l'authentification pour l'accès au serveur applicatif sur le deuxième réseau de communications de données (par exemple sur le réseau PDN).

Le procédé proposé peut comprendre, à l'unité de gestion d'authentification, la réception d'une requête d'authentification de l'équipement IED selon la fonction de sécurité du deuxième réseau de communication, la requête d'authentification utilisant l'élément de sécurité initial. L'unité de gestion d'authentification peut alors effectuer les vérifications d'authentification prévues pour l'accès au serveur applicatif, y compris celles proposées, et en cas de succès générer une réponse de succès d'authentification de l'équipement pour autoriser l'accès de l'équipement au serveur applicatif.

Dans un ou plusieurs modes de réalisation, l'unité de gestion d'authentification peut en outre être configurée pour, sur réception d'un message du serveur applicatif indiquant que l'équipement est enregistré auprès du serveur applicatif en utilisant une connexion sécurisée entre l'équipement et le serveur applicatif suite au succès d'authentification de l'équipement, obtenir un élément de sécurité opérateur, et transmettre cet élément de sécurité opérateur au serveur applicatif pour transmission à l'équipement IED en utilisant la connexion sécurisée.

Dans les cas de figure où l'unité de gestion d'authentification est configurée pour utiliser une base de données de cohérence, l'unité de gestion d'authentification peut en outre être configurée pour envoyer à la base de données une requête de mise à jour de l'élément de sécurité initial avec l'élément de sécurité opérateur.

Ainsi, par exemple, lorsque l'équipement IED est doté nativement d'un certificat « constructeur », il utilise ce certificat « constructeur » pour s'authentifier auprès du serveur d'authentification du réseau IP auquel le serveur applicatif est connecté, qui connait la clé publique du constructeur. L'unité de gestion d'authentification proposée peut aussi mettre en œuvre le procédé proposé pour valider ou non l'authentification de l'équipement IED avec son certificat « constructeur ». Lorsque l'authentification réussit, un tunnel sécurisé peut être ouvert entre l'équipement IED et le serveur applicatif.

Le serveur d'authentification peut alors faire parvenir à l'équipement IED, par ce tunnel sécurisé, un certificat « opérateur » signé par l'opérateur, éventuellement par le biais de l'unité de gestion d'authentification, pour que l'équipement IED mette à jour son certificat en remplaçant le certificat « constructeur » par le certificat « opérateur ».

L'unité de gestion d'authentification peut en outre être configurée pour obtenir ce nouveau certificat « opérateur », et le transmettre à la base de données de cohérence pour mise à jour de l'enregistrement relatif à l'équipement IED, le cas échéant, pour que cet enregistrement mis à jour soit utilisé lors des requêtes ultérieures d'accès au serveur applicatif émanant de l'équipement IED.

La figure 4 est un diagramme illustrant un exemple d'authentification double selon un ou plusieurs modes de réalisation.

L'exemple de séquencement illustré sur la figure 4 peut être mis en œuvre dans l'exemple non limitatif d'architecture illustré par la figure 2c, auquel il sera fait référence pour la description de la figure 4.

En référence à la figure 4, on considère un exemple de double authentification d'un équipement IED, auprès d'un réseau EPS comprenant un réseau d'accès radio comprenant un Node-B et un réseau cœur comprenant une fonction HSS et une fonction S-GW, et auprès d'un réseau PDN, pour des communications de données entre l'équipement IED et un serveur applicatif du réseau PDN. Le procédé proposé illustré sur la figure 4 utilise un serveur « Smartgrid security GW » fournissant une fonction de gestion d'authentification, par exemple selon un ou plusieurs des modes de réalisation décrits ci-dessus, et un serveur de gestion de cohérence (« Consistency server ») muni d'une base de données de cohérence, par exemple selon un ou plusieurs des modes de réalisation décrits ci-dessus.

Les liens de communications entre l'équipement IED et le Node-B sont des liens de communications sans fil, tandis que les liens de communications entre le Node B et le serveur applicatif « Smartgrid app server » sont des liens de communication filaires. D'autre part, les liens de communications entre l'équipement IED et le S-GW sont mis en œuvre dans le réseau d'accès (réseau EPS (4) sur la figure 2c), tandis que les liens de communications entre le S-GW et le serveur applicatif « Smartgrid app server » sont mis en œuvre dans un réseau de communication de données (réseau PDN (5) sur la figure 2c).

L'équipement IED transmet une première requête d'authentification (« Auth #1, IMSI, ... ») dans le réseau d'accès au serveur HSS de ce réseau. L'identifiant de l'équipement IED dans le réseau d'accès utilisé pour cette première requête d'authentification (par exemple un identifiant IMSI) est alors transmis par le HSS à un serveur de gestion de cohérence, directement ou par le biais du serveur « Smartgrid security GW ». Le serveur de gestion de cohérence vérifie (« Identifiant valide - équipement sain ? ») si la base de données de cohérence contient un enregistrement avec l'identifiant de l'équipement IED dans le réseau d'accès utilisé pour la première requête d'authentification. Si l'identifiant est enregistré dans la base de données de cohérence, l'équipement est considéré comme sain, et le processus d'authentification est poursuivi. Dans le cas contraire (non illustré sur la figure), si l'identifiant n'est pas enregistré dans la base de données de cohérence, l'équipement est considéré comme frauduleux et la requête comme une attaque, et le processus d'authentification est stoppé, avec éventuellement mise à jour de la base de données de cohérence avec l'identifiant utilisé par l'équipement frauduleux. En fonction du mode de réalisation, la réponse concernant la validité de l'identifiant peut être transmise par le serveur de gestion de cohérence vers un serveur « Smartgrid security GW » et la réponse de succès ou non d'authentification transmise par le serveur « Smartgrid security GW » au HSS, ou la réponse de succès ou non d'authentification être générée par le serveur de gestion de cohérence, et relayée par le serveur « Smartgrid security GW » vers le HSS.

Dans un ou plusieurs modes de réalisation, un temporisateur peut être armé (« Timer T=0 ») sur détermination que l'identifiant est enregistré dans la base de données de cohérence, et donc que l'équipement est sain. Dans d'autres modes de réalisation, le temporisateur peut être armé dès réception de l'identifiant. En outre, en fonction du mode de réalisation, le temporisateur peut être géré par le serveur de gestion de cohérence ou par le serveur « Smartgrid security GW ».

Sur succès de la première requête d'authentification, la fonction de sécurité du réseau d'accès est mise en œuvre pour sécuriser les données échangées par l'équipement IED avec ce réseau : un tunnel (S1) de sécurité (Authentification, Intégrité, et/ou Chiffrement) est établi pour les communications de données sur l'interface air entre l'équipement IED et le Node-B, puis des éléments de sécurité sont échangés avec le HSS pour la mise en œuvre d'un tunnel de sécurité (Authentification, Intégrité, et/ou Chiffrement), par exemple selon le protocole PDCP, entre l'équipement IED et le Node-B, et d'un tunnel S2 de sécurité (Authentification, Intégrité, et/ou Chiffrement), par exemple selon le protocole IPSec, pour les communications de données entre le Node-B et le S-GW.

Une fois les communications de données dans le réseau d'accès (EPS) sécurisées grâce aux fonctions de sécurité utilisées par le réseau d'accès, l'équipement IED transmet une deuxième requête d'authentification (« Auth #2, IDutility, ... ») dans le deuxième réseau au serveur « Smartgrid security GW ». Un identifiant (IDutility) de l'équipement IED dans le deuxième réseau utilisé pour cette deuxième requête d'authentification (par exemple contenu dans un certificat avec lequel l'équipement IED est préconfiguré) est fourni au serveur « Smartgrid security GW » avec la requête, puis transmis au serveur de gestion de cohérence. Dans les modes de réalisation où l'identifiant « IDutility » est contenu dans un certificat, ce certificat peut contenir une association infalsifiable entre une identité et une clé publique. L'identifiant « IDutility » peut alors être de manière bi-univoque l'identité ou la clé publique. Lorsque l'identifiant utilisé est la clé publique, c'est un élément de sécurité. A cet égard, dans certains systèmes, un identifiant du type adresse mail peut être choisi comme clé publique, et le système configuré pour qu'une clé privée puisse être déduite de cette adresse. Le serveur de gestion de cohérence vérifie (« Identifiant valide - équipement sain ? ») si la base de données de cohérence contient un enregistrement avec l'identifiant de l'équipement IED dans le réseau d'accès utilisé pour la première requête d'authentification en correspondance avec l'élément de sécurité. Si le couple identifiant et élément de sécurité est enregistré dans la base de données de cohérence, l'équipement est considéré comme sain, et le processus d'authentification est terminé. Dans le cas contraire (non illustré sur la figure), si le couple identifiant et élément de sécurité n'est pas enregistré dans la base de données de cohérence, l'équipement est considéré comme frauduleux et la requête comme une attaque, et le processus d'authentification est en échec, avec éventuellement mise à jour de la base de données de cohérence avec l'identifiant et l'élément de sécurité utilisés par l'équipement frauduleux. En fonction du mode de réalisation, la réponse concernant la validité de la requête peut être transmise par le serveur de gestion de cohérence vers le serveur « Smartgrid security GW » et la réponse de succès ou non d'authentification transmise par le serveur « Smartgrid security GW » au HSS, ou la réponse de succès ou non d'authentification être générée par le serveur de gestion de cohérence, et relayée par le serveur « Smartgrid security GW » vers l'équipement IED.

Sur succès de la deuxième requête d'authentification, la fonction de sécurité du deuxième réseau est mise en œuvre pour sécuriser les données échangées par l'équipement IED avec le serveur applicatif « Smartgrid app server » : un tunnel (S3) de sécurité (Authentification, Intégrité, et/ou Chiffrement) est établi, par exemple selon le protocole TLS, pour les communications de données entre l'équipement IED et le serveur applicatif « Smartgrid app server ».

Dans les modes de réalisation dans lesquels un temporisateur a été armé (« Timer T=0 ») sur détermination que l'identifiant est enregistré dans la base de données de cohérence, et donc que l'équipement est sain, il peut être vérifié que ce temporisateur n'a pas expiré avant qu'il soit déterminé que le couple identifiant et élément de sécurité est enregistré dans la base de données de cohérence, et donc que l'équipement est sain. S'il est déterminé que le temporisateur a déjà expiré, il peut être considéré que les deux requêtes d'authentification, quand bien même elles seraient valides, émanent d'un équipement frauduleux, et l'authentification peut en conséquence être refusée. Dans le cas contraire, la défense contre les attaques utilisant le temporisateur peut être considérée comme n'ayant pas donné lieu à l'identification d'une attaque.

Différents cas d'usage peuvent donc être envisagés sur la base de l'exemple illustré sur la figure 4 :

Selon un premier cas d'usage, l'équipement IED s'authentifie correctement sur le réseau d'accès mais ne s'authentifie pas normalement sur l'applicatif smartgrid. Ce cas de figure peut se rencontrer dans le cas d'essais multiples d'authentification sur l'applicatif smartgrid, dans le cas où le temporisateur expire, et/ou dans le cas d'un échec d'authentification sur l'applicatif smartgrid. L'identifiant (par exemple l'IMSI) relié à l'élément de sécurité (par exemple l'identité publique du certificat) utilisé pour la demande d'accès à l'application est alors stocké dans une base de données (par exemple la base de données de cohérence) d'équipements douteux pour refus d'accès ultérieurs à l'application.

Selon un deuxième cas d'usage, l'équipement IED s'authentifie correctement au niveau de l'applicatif smartgrid mais n'a pas fait l'objet d'une authentification préalable et réussie sur le réseau d'accès, a fait de nombreuses tentatives préalables ratées sur le réseau d'accès, et/ou a dépassé le temps imparti. L'identifiant (par exemple l'IMSI) relié à l'élément de sécurité (par exemple l'identité publique du certificat) utilisé pour la demande d'accès à l'application est là encore stocké dans une base de données (par exemple la base de données de cohérence) d'équipements douteux pour refus d'accès ultérieurs à l'application. L'élément de sécurité (par exemple l'identité publique du certificat) utilisé pour la demande d'accès à l'application est stocké dans une base de données d'équipements douteux pour refus d'accès ultérieurs à l'application.

La figure 5a illustre un exemple de séquence de double authentification d'un équipement selon un ou plusieurs modes de réalisation.

L'exemple de séquence illustré sur la figure 5a peut être mis en œuvre dans l'exemple non limitatif d'architecture illustré par la figure 2c, auquel il sera fait référence pour la description de la figure 5a. Dans l'exemple illustré par la figure 5a, le réseau d'accès EPS comprend un réseau d'accès radio de type 3GPP et utilise un mécanisme de sécurité de type symétrique (à clés secrètes), et l'équipement IED est muni d'un identifiant dans ce réseau d'accès de type IMSI. Comme décrit ci-dessus, l'équipement IED peut être doté d'un module SIM avec l'identifiant IMSI correspondant et une clé secrète. Le réseau PDN peut quant à lui être un réseau IP qui utilise un mécanisme de sécurité de type asymétrique avec un processus authentification utilisant un certificat dont l'équipement IED est aussi doté.

En référence à la figure 5a, on considère un exemple de double authentification d'un équipement IED, auprès d'un réseau EPS comprenant un réseau d'accès radio et un réseau cœur comprenant une fonction HSS, et auprès d'un réseau PDN, pour des communications de données entre l'équipement IED et un serveur applicatif du réseau PDN. Le procédé proposé illustré sur la figure 5a utilise un serveur « Smartgrid GW / consistency » qui combine un serveur fournissant une fonction de gestion d'authentification avec un serveur de gestion de cohérence (« Consistency server ») muni d'une base de données de cohérence, par exemple selon un ou plusieurs des modes de réalisation décrits ci-dessus.

Les notations suivantes sont utilisées sur les figures 5a et 5b :
IDutility, l'identité numérique de l'équipement fournie par le « utility » du point de vue du deuxième réseau (par exemple par la PKI du réseau PDN).

Rand-s, les questions aléatoires générées par le HSS à chaque connexion d'accès.

Rand-u le challenge aléatoire généré par le serveur « Smartgrid GW / consistency » (u pour « utility ») à chaque authentification applicative.

Rand-c la question aléatoire générée (une fois) permet d'obtenir une connexion sécurisée sur la base des identifiants « constructeurs » pour l'enrôlement du certificat « utility ».

KsIED : La clé secrète contenue dans le module SIM de l'équipement IED.

L'action de chiffrer une grandeur X par une clé secrète ks se note (X)ₖₛ

L'action de déchiffrer une grandeur X par une clé secrète ks se note (X)⁻¹ₖₛ

k_{pubutility-IED} est la clé publique contenu dans le certificat de l'équipement une fois enrôlé, qui lie cette clé avec l'identité de l'équipement attribué par le « utility »

k_{secutility-IED} est la clé privé connu uniquement de la PKI-E (serveur « Smartgrid GW / consistency ») de l'équipement une fois enrôlé.

k_{pubcons-IED} est la clé publique contenu dans le certificat constructeur de l'équipement avant enrôlement, qui lie cette clé avec l'identité de l'équipement attribué par le « constructeur »

k_{seccons-IED} est la clé privé connu uniquement de la PKI-E (serveur « Smartgrid GW / consistency ») de l'équipement avant enrolement par le « utility »

IMSI : l'identifiant de l'équipement IED au sens 3GPP

IDconstructeur : l'identité numérique de l'équipement fournie par le constructeur

du point de vue du deuxième réseau (par exemple par la PKI du réseau PDN)

En référence à la figure 5a, une requête de connexion au réseau 3GPP émise par l'équipement IED donne lieu à un challenge aléatoire (Rand-s) généré par le HSS et transmis à l'équipement IED. L'équipement IED répond ((Rand-s)_{ksIED}) avec son identifiant IMSI (IMSI) et la question aléatoire chiffrée avec sa clé secrète (ksIED).

Sur réception de la réponse de l'équipement IED, le HSS vérifie que la question a été correctement chiffrée en la déchiffrant avec la clé secrète de l'équipement IED : (Rand-s=((Rand-s)_{kIED})⁻¹_{KsIED}).

Une fois cette vérification effectuée avec succès, le HSS transmet au serveur « Smartgrid GW / consistency » l'identifiant IMSI reçu de l'équipement IED. Dans les cas de figure où l'identifiant IMSI n'est pas transmis au HSS avec la requête ou la réponse d'authentification de l'équipement IED (ou, de manière plus générale l'identifiant de l'équipement utilisé par le serveur « Smartgrid GW / consistency » pour la double authentification proposée n'est pas transmis au HSS ou n'est pas transmis au serveur par le HSS), le serveur « Smartgrid GW / consistency » peut, dans un ou plusieurs modes de réalisation, être configuré pour requérir de l'équipement IED qu'il lui fournisse son identifiant, éventuellement par le biais du HSS, comme illustré sur la figure.

Le serveur « Smartgrid GW / consistency » peut alors utiliser l'identifiant IMSI de l'équipement IED ainsi obtenu pour effectuer une vérification de sécurité sur la base de cet identifiant, selon un ou plusieurs modes de réalisation du procédé proposé, notamment en interrogeant une base de données de cohérence comme décrit dans la présente description.

Dans les cas de figure où la séquence d'authentification de l'équipement IED n'est pas stoppée, le serveur « Smartgrid GW / consistency » génère une question aléatoire (Rand-u) dans le cadre d'une authentification de l'équipement IED pour l'accès au serveur applicatif du réseau PDN. Cette question donne lieu à une réponse ((Rand-u)_{kpubutility-IED}) de l'équipement IED avec un identifiant (ID) et la question aléatoire chiffrée avec sa clé publique (kpubutility-IED).

Sur réception de la réponse de l'équipement IED, le serveur « Smartgrid GW / consistency » vérifie que la question a été correctement chiffrée en la déchiffrant avec sa clé secrète pour l'équipement IED (ksecutility-IED): (Rand-u=((Rand-u)_{kpubutility-IED})⁻¹_{secutility-IED}).

Indépendamment de cette vérification, ou, selon les modes de réalisation, une fois cette vérification effectuée, le serveur « Smartgrid GW / consistency » peut alors utiliser l'identifiant IMSI de l'équipement IED obtenu et la clé publique (kpubutility-IED) de l'équipement IED pour effectuer une vérification de sécurité sur la base de cette paire identifiant - clé publique, selon un ou plusieurs modes de réalisation du procédé proposé, notamment en interrogeant une base de données de cohérence et/ou en utilisant un temporisateur comme décrit dans la présente description.

Dans les cas de figure où la séquence d'authentification de l'équipement IED se termine avec succès, un tunnel sécurisé, par exemple de type VPN, peut être mis en œuvre entre l'équipement IED et le serveur applicatif pour l'échange de données entre ces deux équipements.

La figure 5b illustre la fourniture d'un certificat « utility » (ou « opérateur ») en remplacement du certificat initial dont est doté l'équipement IED, qui a été fourni par le constructeur et contient par exemple un identifiant constructeur (IDconstructeur), selon un ou plusieurs modes de réalisation.

Le procédé d'authentification illustré sur la figure 5b est similaire à celui illustré sur la figure 5a, à la différence près que l'authentification dans le deuxième réseau (par exemple réseau PDN) utilise une clé publique (un certificat) constructeur (kpubconst-IED) dont l'équipement IED a été initialement doté par le constructeur

Dans les cas de figure où la séquence d'authentification de l'équipement IED se termine avec succès, un tunnel sécurisé, par exemple de type VPN, peut être mis en œuvre entre l'équipement IED et le serveur applicatif pour l'échange de données entre ces deux équipements.

Ce tunnel sécurisé peut ensuite être utilisé pour fournir à l'équipement IED une autre clé publique (un autre certificat, contenant par exemple un identifiant utility IDutility) (kpubutility-IED), généré par exemple par l'opérateur (ou « utility »), afin que l'équipement IED utilise cette nouvelle clé publique pour toutes ses requêtes d'accès ultérieures au serveur applicatif.

La figure 6 illustre un exemple d'architecture d'équipement pour la mise en œuvre du procédé proposé selon un ou plusieurs modes de réalisation.

En référence à la figure 6, le dispositif 100 comprend un contrôleur 101, couplé de manière opérationnelle à une interface de communication 102 et à une mémoire 103, qui pilote un module de gestion d'authentification 104.

L'interface de communication 102 comprend une ou plusieurs unités de communication, chacune configurée pour émettre et/ou recevoir des données selon un ou plusieurs protocoles de communication de données (par voie filaire ou sans-fil), par exemple de type WLAN, Ethernet, UMTS, LTE, LTE-A.

Le contrôleur 101 est configuré pour piloter le module de gestion d'authentification 104 et l'interface de communication 102 pour la mise en œuvre d'un ou de plusieurs modes de réalisation du procédé proposé.

Le module de gestion d'authentification 104 est configuré pour la mise en œuvre du procédé proposé par un serveur connecté à un réseau de communication de données auquel est connecté un serveur applicatif, pour la gestion de l'authentification des équipements demandant un accès au serveur applicatif pour l'échange de données dans le cadre de l'exécution d'une application, comme par exemple une application de service. En particulier, le module de gestion d'authentification 104 peut être configuré pour remplir les fonctions et accomplir les actes décrits dans la présente description pour la mise en œuvre du procédé proposé par une unité de gestion d'authentification et/ou un serveur de gestion de cohérence connecté à une base de données de cohérence.

Le dispositif 100 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, une mémoire SSD, etc. En fonction du mode de réalisation, la mémoire, l'unité de stockage de données ou le support de stockage amovible contient des instructions qui, lorsqu'elles sont exécutées par le contrôleur 101, amènent ce contrôleur 101 à effectuer ou contrôler les parties module de gestion d'authentification 104 et interface de communication 102 des exemples de mise en œuvre du procédé proposé décrits dans la présente description. Le contrôleur 101 peut être un composant implémentant un processeur ou une unité de calcul pour la gestion de communications selon le procédé proposé et le contrôle des unités 102 et 104 du dispositif 100.

Le dispositif 100 peut être mis en œuvre sous forme logicielle, sous forme matérielle, comme un circuit intégré spécifique application (ASIC), ou sous forme d'une combinaison d'éléments matériels et logiciels, comme par exemple un programme logiciel destiné à être chargé et exécuté sur un composant de type FPGA (Field Programmable Gate Array). De même, le module de gestion d'authentification 104 peut être mis en œuvre sous forme logicielle, sous forme matérielle, comme un ASIC, ou sous forme d'une combinaison d'éléments matériels et logiciels, comme par exemple un programme logiciel destiné à être chargé et exécuté sur un composant de type FPGA.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé proposé et le dispositif pour la mise en œuvre d'un mode de réalisation du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous-combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Procédé de gestion d'authentification d'un équipement dans un système de communication de données pour l'échange de données entre l'équipement et un serveur applicatif du système, le système comprenant un premier réseau de communication de données utilisant une première fonction de sécurité pour sécuriser les communications de données au sein du premier réseau, couplé de manière opérationnelle à un deuxième réseau de communication de données utilisant une deuxième fonction de sécurité pour sécuriser les communications de données au sein du deuxième réseau, le procédé comprenant, dans une unité de gestion d'authentification du système mise en œuvre dans un nœud du deuxième réseau de communication :
recevoir une requête d'authentification de l'équipement selon la deuxième fonction de sécurité pour l'accès au serveur applicatif;
déterminer si un identifiant de l'équipement dans le premier réseau de communication a été reçu suite à la réception d'une requête d'authentification de l'équipement selon la première fonction; et lorsque l'identifiant de l'équipement n'a pas été reçu, générer une réponse d'échec d'authentification de l'équipement.

2. Procédé selon la revendication 1, comprenant en outre: recevoir une requête d'authentification de l'équipement selon la première fonction de sécurité au premier réseau de communication, la requête d'authentification utilisant l'identifiant de l'équipement.

3. Procédé selon la revendication 2, dans lequel le système comprend en outre une base de données préconfigurée avec une correspondance entre l'identifiant et un élément de sécurité de la deuxième fonction de sécurité pour des requêtes d'authentification de l'équipement selon la deuxième fonction adressées au deuxième réseau, le procédé comprenant en outre : envoyer à la base de données une requête de vérification d'enregistrement dans la base de données de l'identifiant reçu, la requête comprenant l'identifiant reçu.

4. Procédé selon la revendication 3, comprenant en outre : sur réception d'une réponse d'absence dans la base de données d'enregistrement de l'identifiant reçu, ou d'une réponse indiquant une anomalie relative à une ou plusieurs requêtes d'authentification précédentes de l'équipement selon la première fonction de sécurité au premier réseau de communication et/ou selon la deuxième fonction de sécurité au deuxième réseau de communication, générer la réponse d'échec d'authentification de l'équipement.

5. Procédé selon l'une quelconque des revendications 2 à 4, dans lequel le système comprend en outre une base de données préconfigurée avec une correspondance entre l'identifiant et un élément de sécurité de la deuxième fonction de sécurité pour des requêtes d'authentification de l'équipement selon la deuxième fonction adressées au deuxième réseau, le procédé comprenant en outre :
recevoir une requête d'authentification de l'équipement selon la deuxième fonction de sécurité au deuxième réseau de communication, la requête d'authentification utilisant l'élément de sécurité ;
envoyer à la base de données une requête de vérification d'enregistrement dans la base de données de l'identifiant reçu en correspondance avec l'élément de sécurité reçu, la requête comprenant l'identifiant reçu et l'élément de sécurité reçu.

6. Procédé selon la revendication 5, comprenant en outre : sur réception d'une réponse de la base de données indiquant une absence de correspondance entre l'identifiant et l'élément reçus, générer la réponse d'échec d'authentification de l'équipement.

7. Procédé selon la revendication 2, comprenant en outre :
initialiser un temporisateur à une durée prédéfinie sur réception de la requête d'authentification de l'équipement selon la première fonction de sécurité au premier réseau de communication ; et
lorsqu'aucune requête d'authentification de l'équipement selon la deuxième fonction de sécurité au deuxième réseau de communication n'est reçue avant l'expiration du temporisateur, générer la réponse d'échec d'authentification de l'équipement.

8. Procédé selon l'une quelconque des revendications 1, 4, 6 et 7, dans lequel le système comprend en outre une base de données préconfigurée avec une correspondance entre l'identifiant et un élément de sécurité de la deuxième fonction de sécurité pour des requêtes d'authentification de l'équipement selon la deuxième fonction adressées au deuxième réseau, le procédé comprenant en outre :
envoyer à la base de données une requête d'enregistrement de l'échec d'authentification de l'équipement en correspondance avec l'identifiant et/ou l'élément de sécurité.

9. Procédé selon l'une quelconque des revendications précédentes, dans lequel l'équipement est muni d'un élément de sécurité initial de la deuxième fonction de sécurité pour des requêtes d'authentification de l'équipement selon la deuxième fonction adressées au deuxième réseau, le procédé comprenant :
recevoir une requête d'authentification de l'équipement selon la deuxième fonction de sécurité au deuxième réseau de communication, la requête d'authentification utilisant l'élément de sécurité initial ;
générer une réponse de succès d'authentification de l'équipement pour autoriser l'accès de l'équipement au serveur applicatif ;
sur réception d'un message du serveur applicatif indiquant que l'équipement est enregistré auprès du serveur applicatif en utilisant une connexion sécurisée entre l'équipement et le serveur applicatif suite au succès d'authentification de l'équipement, obtenir un élément de sécurité opérateur ; et
transmettre l'élément de sécurité opérateur au serveur applicatif pour transmission à l'équipement en utilisant la connexion sécurisée.

10. Procédé selon la revendication 9, dans lequel le système comprend en outre une base de données préconfigurée avec une correspondance entre l'identifiant et l'élément de sécurité initial de la deuxième fonction de sécurité pour des requêtes d'authentification de l'équipement selon la deuxième fonction adressées au deuxième réseau, le procédé comprenant en outre :
envoyer à la base de données une requête de mise à jour de l'élément de sécurité initial avec l'élément de sécurité opérateur.

11. Procédé selon l'une quelconque des revendications 1, 4, 6 et 7, dans lequel le système comprend en outre une base de données préconfigurée avec une correspondance entre l'identifiant et un élément de sécurité de la deuxième fonction de sécurité pour des requêtes d'authentification de l'équipement selon la deuxième fonction adressées au deuxième réseau, le procédé comprenant en outre :
envoyer à la base de données une requête d'enregistrement de l'échec d'authentification de l'équipement en correspondance avec l'identifiant et/ou l'élément de sécurité.

12. Dispositif de gestion d'authentification d'un équipement dans un système de communication de données, comprenant un processeur, une interface de communications de données et une mémoire couplées de manière opérationnelle au processeur, dans lequel le processeur est configuré pour la mise en œuvre d'un procédé selon l'une quelconque des revendications 1 à 11.

13. Programme d'ordinateur, chargeable dans une mémoire associée à un processeur, et comprenant des portions de code pour la mise en œuvre des étapes d'un procédé selon l'une quelconque des revendications 1 à 11 lors de l'exécution dudit programme par le processeur.

14. Ensemble de données représentant, par exemple par voie de compression ou d'encodage, un programme d'ordinateur selon la revendication 13.

15. Support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à mettre en œuvre le procédé de l'une quelconque des revendications 1 à 11.
